# EUROPEAN PATENT APPLICATION

(11) **EP 4 653 402 A1**
(43) Date of publication of application: **26.11.2025**
(21) Application number: 24177302.7
(22) Date of filing: 22.05.2024
(51) Int. Cl.: C03C 27/10, E06B 3/66

(54) **VACUUM INSULATED GLASS AND METHOD MAKING VACUUM INSULATED GLASS**

(71) Applicant: eLstar Dynamics Patents B.V., 3235 CD Rockanje (NL)
(72) Inventor: SLACK, Anthony John, 83510 Lorgues (FR); THOMAS, David Richard, 06650 Opio (FR); MASSARD, Romaric Mathieu, 5651 GW Eindhoven (NL)
(74) Representative: DeltaPatents B.V.

(57) **Abstract**

A method is provided for making vacuum insulated glass. The method may comprise introducing a first substrate and a second substrate into a low-pressure chamber, pressing the first and second substrate onto each other, the surfaces of the first and second substrate facing each other, wherein, after the pressing, a sealant has been applied around the perimeter of the surface of the first and second substrate outside a sealant barrier on the first substrate, thus sealing a low-pressure layer extending between the first and second substrate, wherein the sealant barrier maintains an integrity of the sealant after the sealant is exposed to atmospheric pressure outside the low-pressure chamber.

## Description

### TECHNICAL FIELD

The presently disclosed subject matter relates to a method for making vacuum insulated glass, and to a vacuum insulated glass.

### BACKGROUND

In the article "Vacuum glazing: Current performance and future prospects," by Philip C. Eames a known vacuum glazing is described. The article explains that vacuum glazing is similar to double glazing in which the gas-filled space is evacuated to low pressure, thus reducing the levels of convection and gaseous conduction to negligible values.

The known vacuum glazing is assembled from two glass sheets, cut to the required dimensions. In one of the sheets an evacuation tube is installed, which is attached during manufacture to an evacuation system. After evacuation, the evacuation tube is sealed.

The evacuation tube and its sealing are an unwelcome visual distraction, and it is desired to remove it. Furthermore, the existing process is cumbersome and resource intensive.

### SUMMARY

It would be advantageous to have a better method for making vacuum insulated window or vacuum insulated glass. In an embodiment, a sealant and a sealant barrier are applied around a perimeter of a surface of the first substrate or both substrates. The first substrate and a second substrate are introduced into a low-pressure chamber, where the first substrate and a second substrate may be pressed onto each other. After the pressing, the sealant has been applied around the perimeter of the surface of the first and second substrate outside the sealant barrier thus sealing a low-pressure layer extending between the first and second substrate. For example, the pressing may cause the sealant to be deposed on the surface of both the first and second substrate, even if before the pressing the sealant was only applied on one of the first and second substrates.

The sealant barrier maintains an integrity of the sealant after the sealant is exposed to atmospheric pressure outside the low-pressure chamber. The sealant forms a contiguous ring, especially after the pressing, sealing the low-pressure chamber.

This method allows use of a low-pressure chamber without having to cure the vacuum glass assembly inside the low-pressure chamber. Furthermore, for the low-pressure chamber an LCD line may be used, in particular a one drop fill machine (ODF), without significant modifications to the machine.

In an embodiment, spacer material, such as photo spacers, is placed between the substrates to maintain the distance between them. For example, the sealant barrier may be created by photolithography within the same layer of the photo spacers that maintain the distance between the substrates. Typically, the sealant barrier is applied, and may be hardened, before applying the sealant.

The sealant barrier thickness may be equal to the final distance between the substrates in the product.

In an embodiment, the sealant barrier may form a contiguous ring around the perimeter of the first surface. This is not necessary though, and in an embodiment, the sealant barrier forms a perforated ring around the perimeter of the first surface. The latter is advantageous as the contact surface between sealant and substrates is increased.

In an embodiment, multiple nested sealant barriers are applied around a perimeter of a surface of the first substrate and/or the second substrate. Sealant may be enclosed in a volume between two consecutive sealant barriers of the multiple nested sealant barriers. For example, this arrangement may be used to bind the substrates using capillary forces and/or to reinforce the insulation properties.

In an embodiment, a light modulator is arranged in parallel to the vacuum insulated glass, wherein the light modulator and vacuum insulated glass, preferably share a substrate.

A further aspect concerns a vacuum insulated glass

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Figure 1a schematically shows a top view of an example of vacuum insulated glass in a low-pressure chamber,
Figure 1b schematically shows a top view of an example of vacuum insulated glass outside a low-pressure chamber,
Figure 2a schematically shows a top view of an example of an embodiment of vacuum insulated glass outside a low-pressure chamber,
Figure 2b schematically shows a top view of an example of an embodiment of vacuum insulated glass in a low-pressure chamber,
Figure 2c schematically shows a top view of an example of an embodiment of vacuum insulated glass outside a low-pressure chamber,
Figure 3a. 1 schematically shows a side view of an example of an embodiment of making vacuum insulated glass,

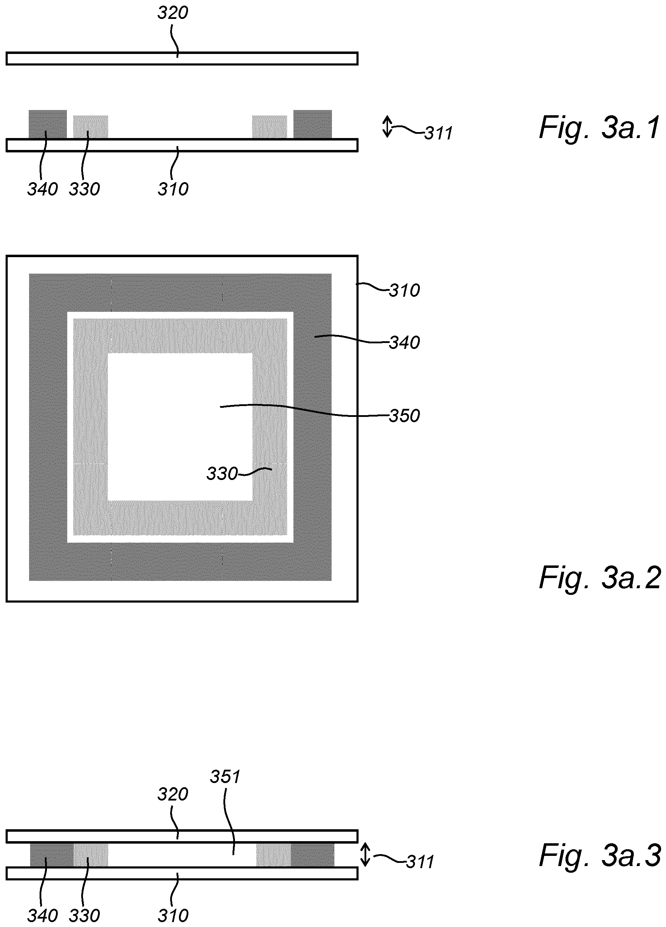

Figure 3a.2 schematically shows a top view of an example of an embodiment of a substrate in vacuum insulated glass,
Figure 3a.3 schematically shows a side view of an example of an embodiment of vacuum insulated glass,

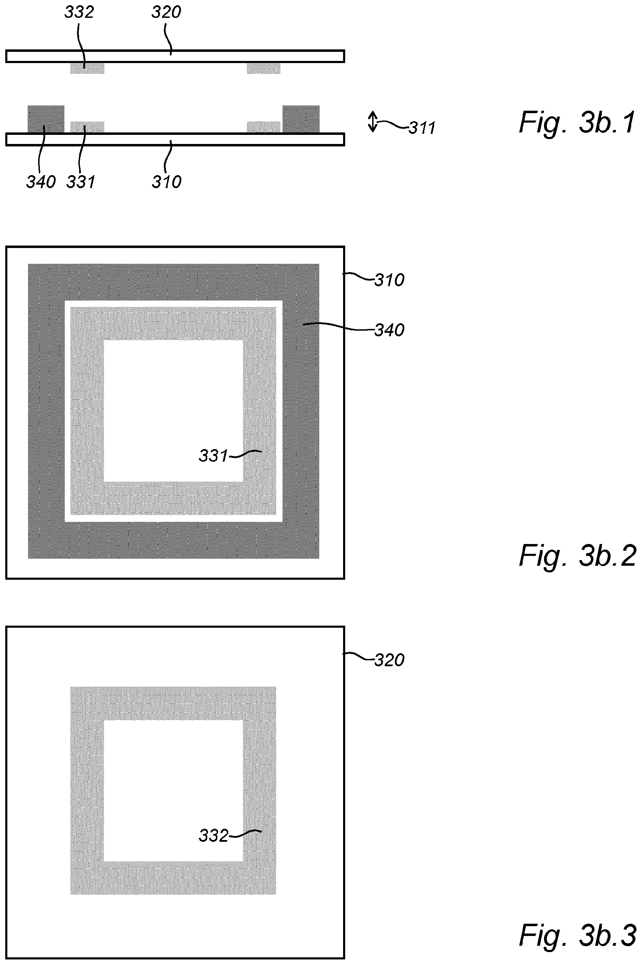

Figure 3b. 1 schematically shows a side view of an example of an embodiment of making vacuum insulated glass,
Figure 3b.2 schematically shows a top view of an example of an embodiment of a substrate in vacuum insulated glass,
Figure 3b.3 schematically shows a top view of an example of an embodiment of a substrate in vacuum insulated glass,

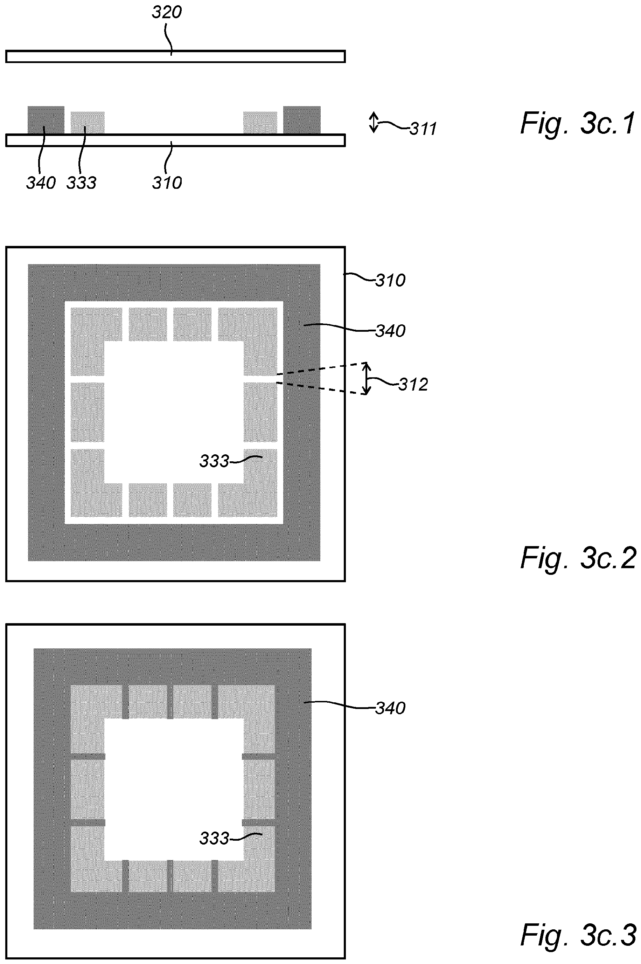

Figure 3c. 1 schematically shows a side view of an example of an embodiment of making vacuum insulated glass,
Figure 3c.2 schematically shows a top view of an example of an embodiment of a substrate in vacuum insulated glass,
Figure 3c.3 schematically shows a top view of an example of an embodiment of vacuum insulated glass,

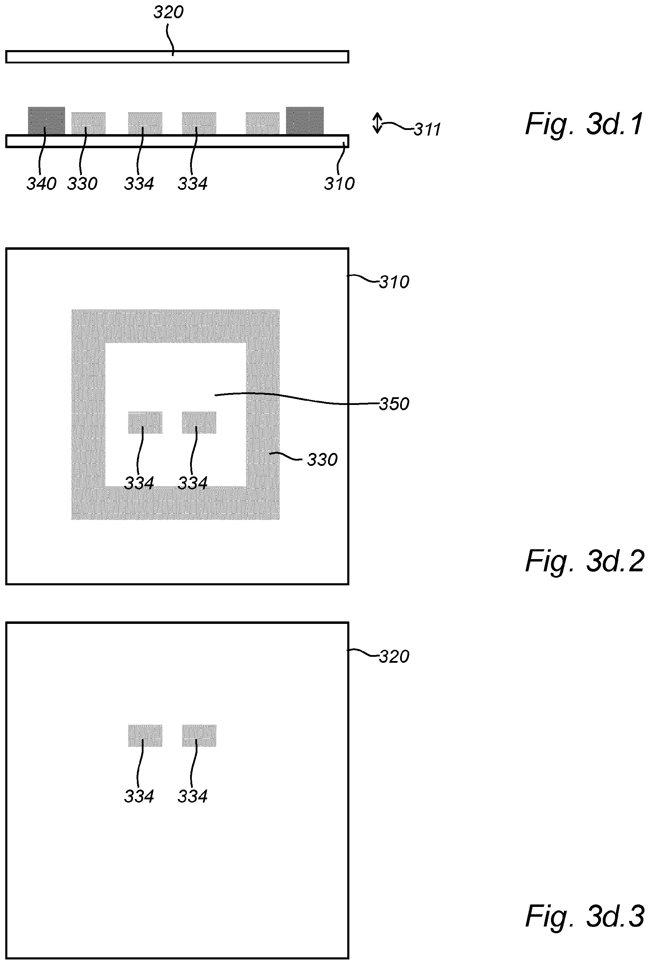

Figure 3d. 1 schematically shows a side view of an example of an embodiment of making vacuum insulated glass,
Figure 3d.2 schematically shows a top view of an example of an embodiment of a substrate for vacuum insulated glass,
Figure 3d.3 schematically shows a top view of an example of an embodiment of a substrate for vacuum insulated glass,

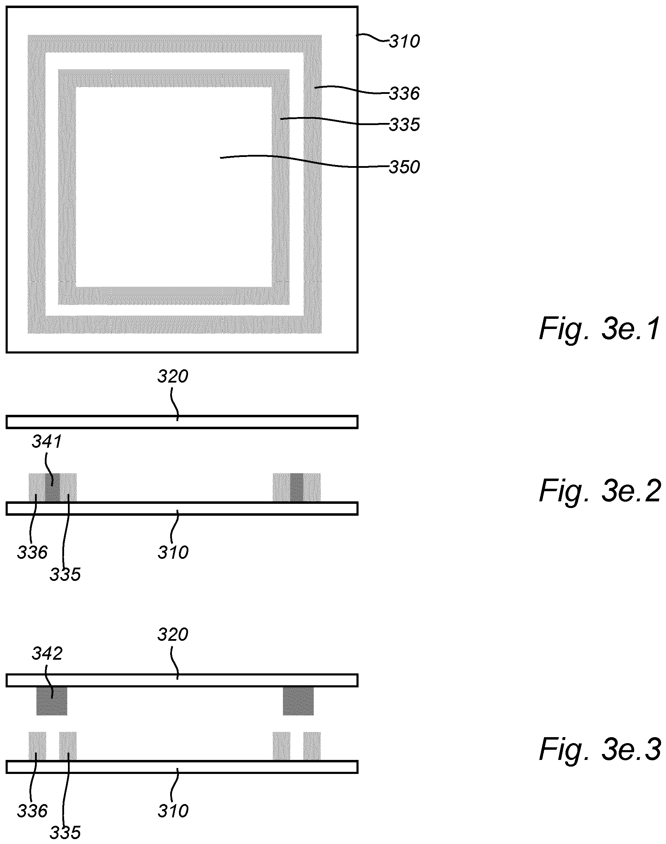

Figure 3e.1 schematically shows a top view of an example of an embodiment of a substrate for vacuum insulated glass,
Figure 3e.2 schematically shows a side view of an example of an embodiment of making vacuum insulated glass,
Figure 3e.3 schematically shows a side view of an example of an embodiment of making vacuum insulated glass,

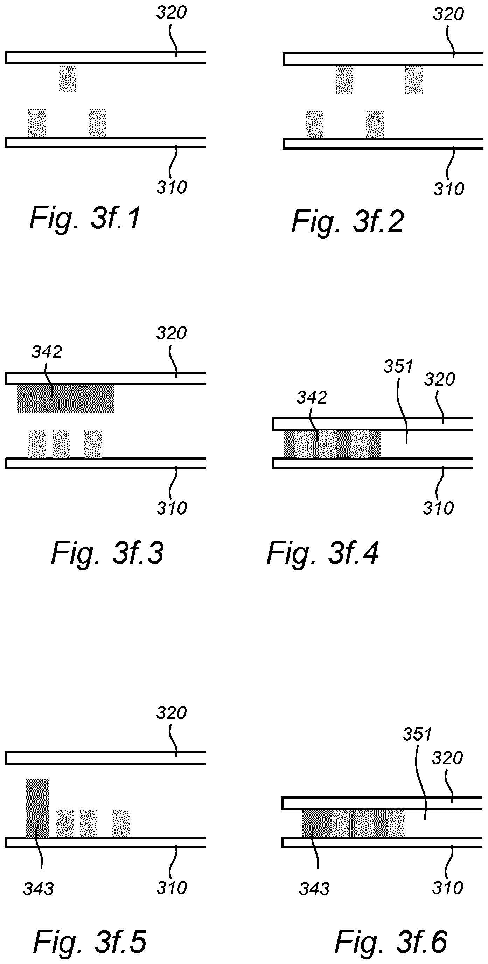

Figure 3f. 1 schematically shows a side view of an example of an embodiment of making vacuum insulated glass,
Figure 3f.2 schematically shows a side view of an example of an embodiment of making vacuum insulated glass,
Figure 3f.3 schematically shows a side view of an example of an embodiment of making vacuum insulated glass,
Figure 3f. 4 schematically shows a side view of an example of an embodiment of vacuum insulated glass,
Figure 3f. 5 schematically shows a side view of an example of an embodiment of making vacuum insulated glass,
Figure 3f.6 schematically shows a side view of an example of an embodiment of vacuum insulated glass,

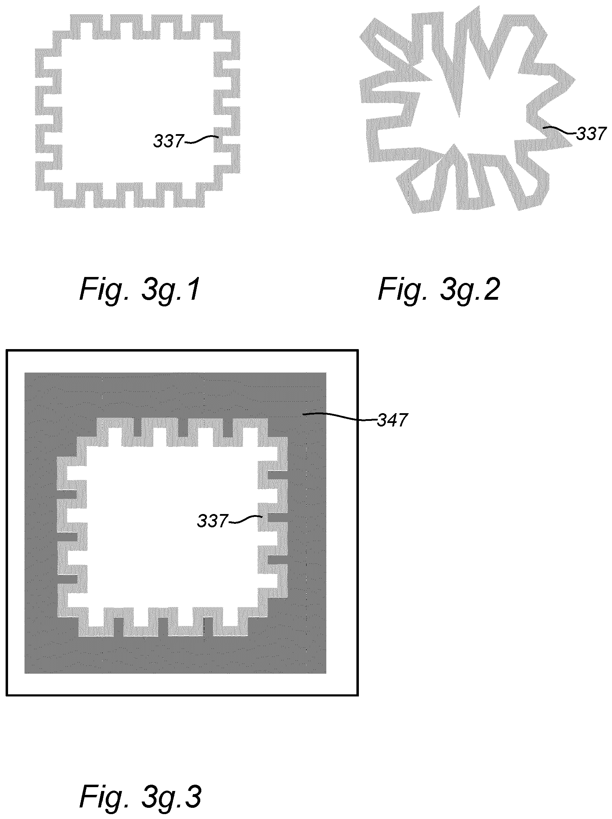

Figure 3g.1 schematically shows a top view of an example of an embodiment of a sealant barrier,
Figure 3g.2 schematically shows a top view of an example of an embodiment of a sealant barrier,
Figure 3g.3 schematically shows a top view of an example of an embodiment of vacuum insulated glass,

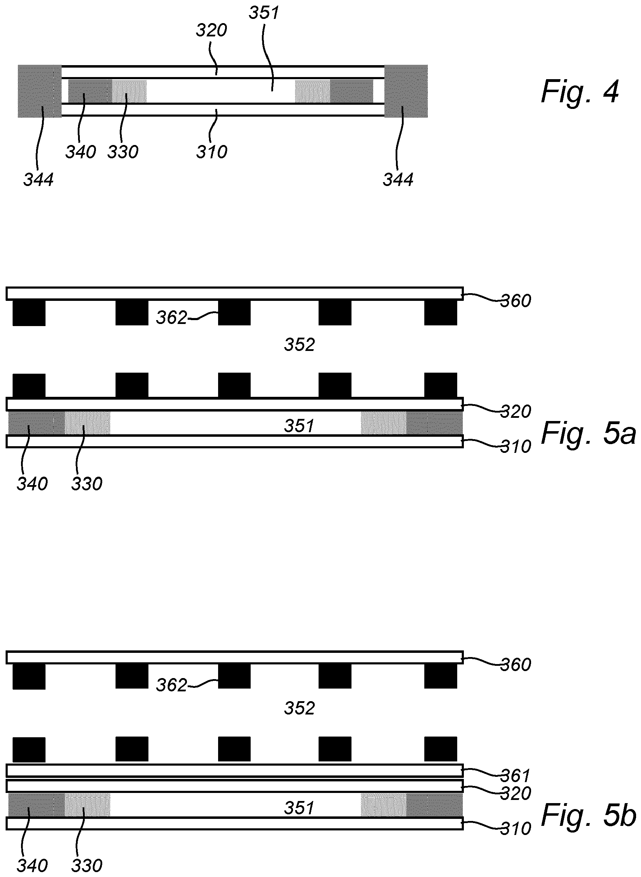

Figure 4 schematically shows a side view of an example of an embodiment of vacuum insulated glass,
Figure 5a schematically shows a side view of an example of an embodiment of vacuum insulated glass and a light modulator,
Figure 5b schematically shows a side view of an example of an embodiment of vacuum insulated glass and a light modulator,

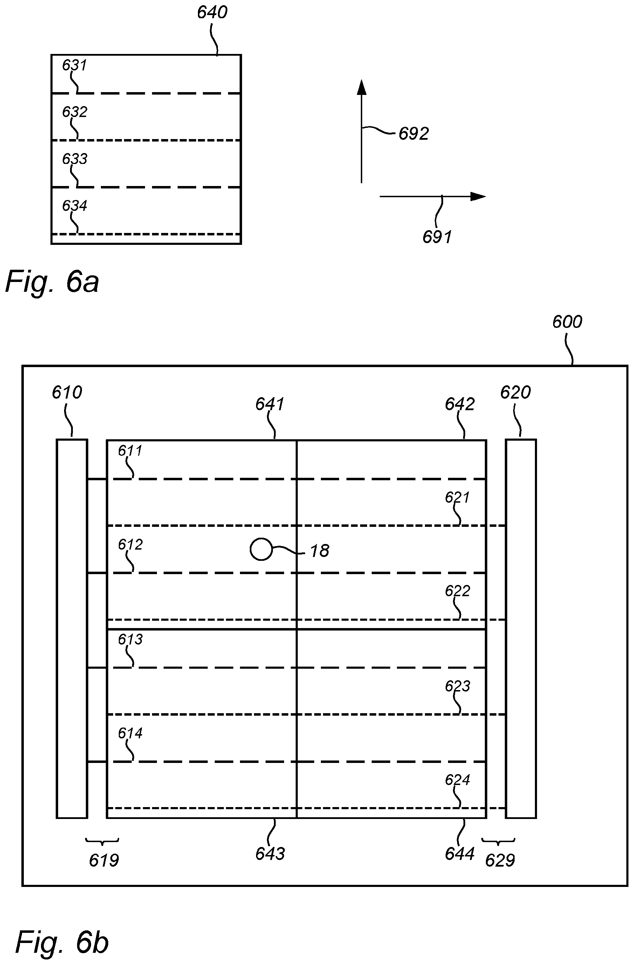

Figure 6a schematically shows an example of an embodiment of a building block,
Figure 6b schematically shows an example of an embodiment of a substrate,

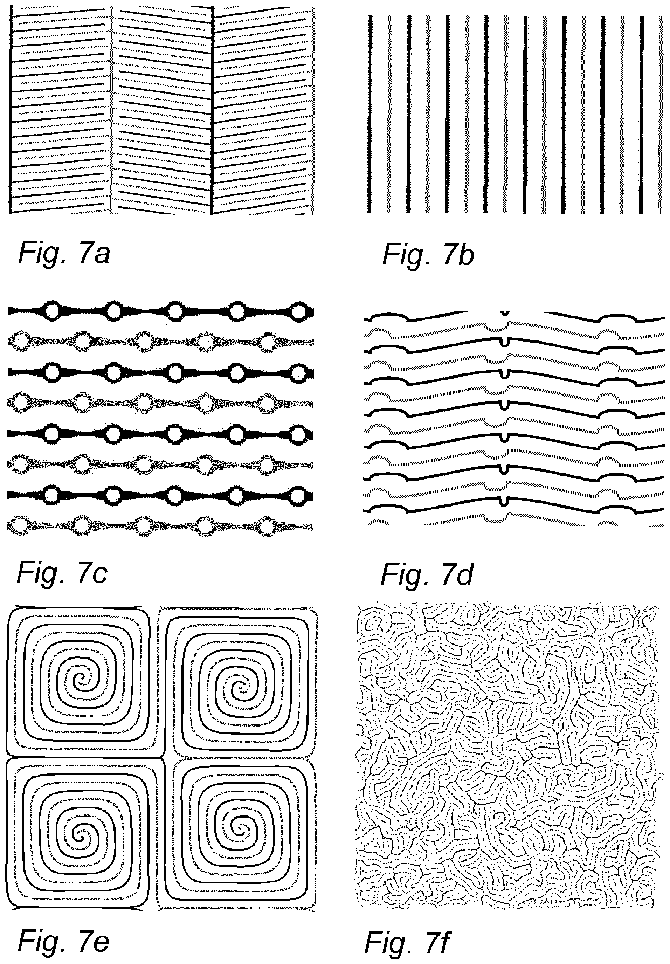

Figures 7a-7f schematically show an example of an embodiment of a substrate,

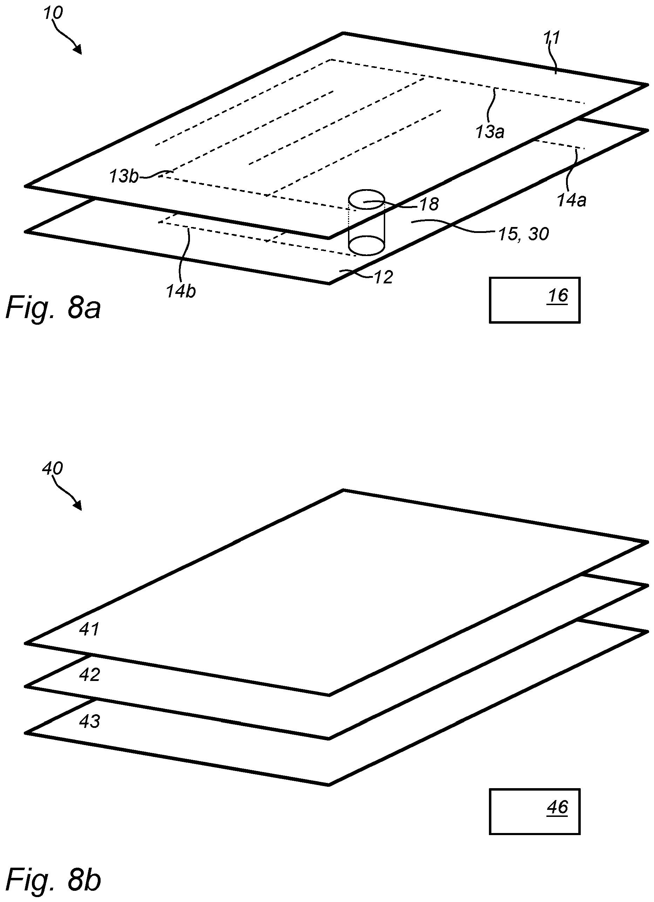

Figure 8a schematically shows an example of an embodiment of a light modulator,
Figure 8b schematically shows an example of an embodiment of a light modulator,

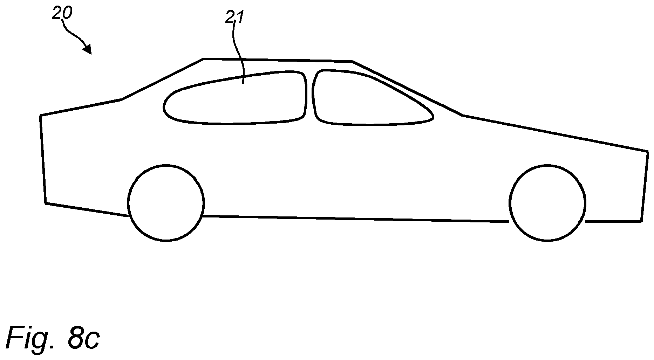

Figure 8c schematically shows an example of an embodiment of a car,

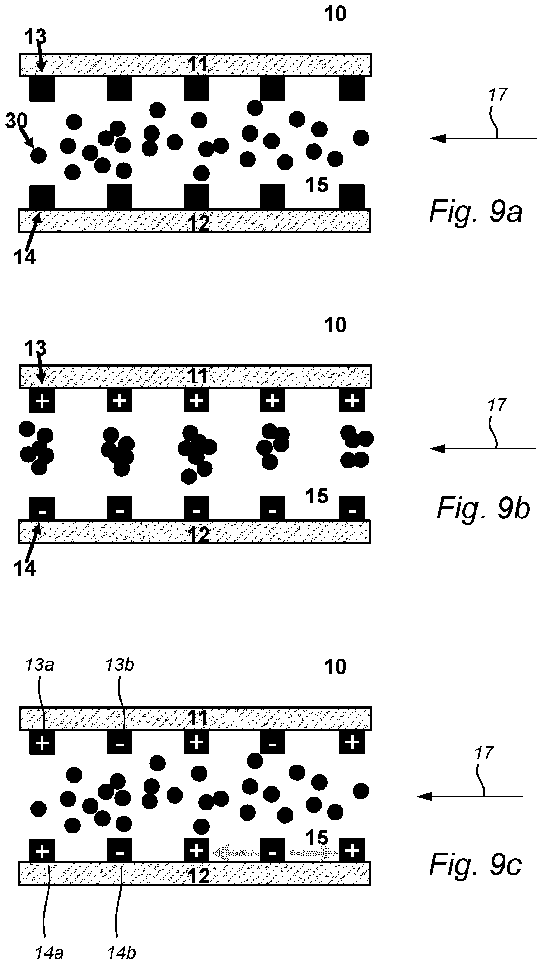

Figures 9a-9c schematically show an embodiment of a light modulator,

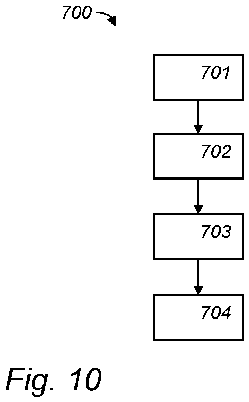

Figure 10 schematically shows an example of an embodiment of a method for making vacuum insulated glass.

### Reference signs list

The following list of references and abbreviations corresponds to the figures, and is provided for facilitating the interpretation of the drawings and shall not be construed as limiting the claims.
- 150: vacuum
- 151: atmospheric pressure
- 140: a sealant
- 130: a sealant barrier

- 310: first substrate
- 311: a cell gap
- 312: perforation width
- 320: a second substrate
- 330: a sealant barrier
- 331, 332: a sealant barrier
- 333: a sealant barrier
- 334: a spacer
- 335: a first sealant barrier
- 336: a second sealant barrier
- 337: a sealant barrier
- 340: a sealant
- 341, 342: a sealant
- 343: a sealant
- 344: a further seal
- 347: a sealant
- 350: region inside the sealant barrier
- 351: a low-pressure layer
- 360: a third substrate
- 361: a further sub strate
- 352: an optical layer
- 362: an electrode

- 600: a substrate
- 611-614: a main line
- 621-624: a main line
- 631-634: interdigitated electrodes
- 640: a building block
- 641-644: a building block
- 610, 620: a driving bus
- 619, 629: a connecting zone
- 691, 692: a direction

- 10: a light modulator
- 11: a first substrate
- 12: a second substrate
- 13, 13a, 13b: electrodes
- 14, 14a, 14b: electrodes
- 15: a fluid
- 16: a controller
- 18: a spacer
- 30: particles
- 20: a car
- 21: a light modulator
- 40: a light modulator
- 41: a first substrate
- 42: a second substrate
- 43: a third substrate
- 46: a controller

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

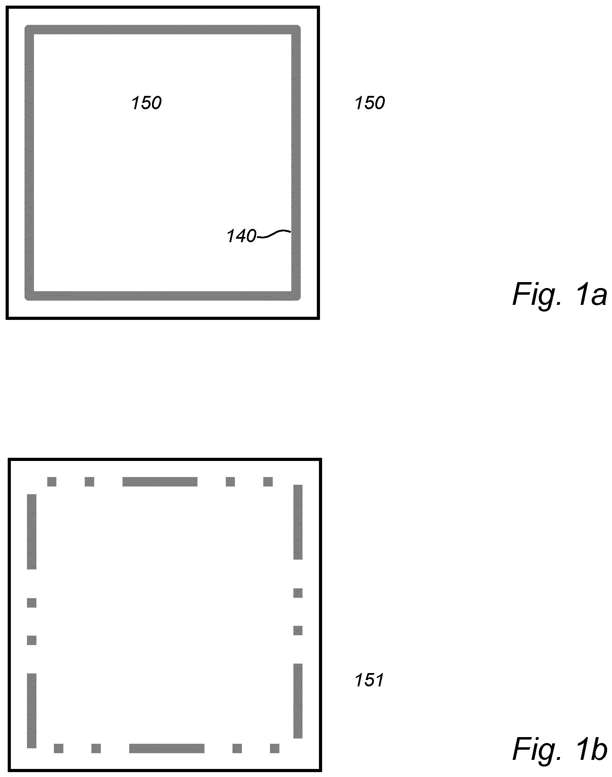

**Figure 1a** schematically shows a top view of an example of vacuum insulated glass in a low-pressure chamber,
**Figure 1b** schematically shows a top view of an example of vacuum insulated glass outside a low-pressure chamber.

One challenge in performing vacuum glazing, also referred to as vacuum insulated glass, within a low-pressure chamber, such as those used in LCD lines, particularly in a One Drop Fill (ODF) machine, is maintaining seal integrity during the process. One possible approach to creating vacuum glazing involves applying sealant to a first substrate of two substrates, then pressing both substrates together in a low-pressure chamber. Ideally, upon removal from the chamber, the substrates should exhibit vacuum glazing-the sealant preserving a low-pressure layer formed between the substrates and the seal. Unfortunately, this method often results in a seal of low quality. A frequent issue is that the seal does not fully cure before removal from the low-pressure chamber. When the newly formed vacuum glazing is exposed to atmospheric pressure, the seal may be pushed inward, compromising its integrity, and in the worst case, may even rupture, resulting in the loss of the low-pressure layer. Additionally, the optical quality of the glazing may be compromised if the seal streaks into its interior.

One solution to this issue is to cure the seal within the low-pressure chamber. For instance, a UV-curable seal could be used, and a UV lamp installed inside the chamber. This new setup would allow the seal to cure after the substrates are pressed together but before the chamber is opened and the substrates are exposed to atmospheric pressure. While this method addresses the initial problem, it introduces new challenges. Firstly, it necessitates different machinery, rendering existing low-pressure chambers, such as those in LCD lines and ODF machines, unsuitable. Secondly, the throughput is significantly affected. Each vacuum glazing must remain in the chamber for the duration of the curing, imposing a delay on the production of each unit.

In figure 1a two substrates are shown on top of each other in a top view. A seal 140 is indicated in the figure. The two substrates are pressed on top of each other in a low-pressure chamber, so both inside and outside the assembly there is a vacuum, e.g., a low-pressure. Figure 1b schematically shows the result of exposing the assembly to a higher pressure, e.g., atmospheric pressure 151 before the seal is cured. The integrity of the sealant is compromised. Likely, this will cause the loss of low-pressure in the assembly, and even if the seal were not to fully rupture, its integrity would be impaired, leading to quality problems later in the lifetime of the vacuum glazing.

In an embodiment, the sealant forms a contiguous ring, especially after the pressing, sealing the low-pressure chamber. The sealant may be applied as a contiguous ring, e.g., outside of the sealant barrier. The contiguous ring may form as a result of the pressing; for example, the sealant may be applied as a series of isolated sealant depositions, which join due to the pressing.

Typically, the sealant and sealant barrier will touch each other. For example, the sealant may be applied to the surface of one or both of the substrates, touching the barrier; alternatively the sealant will be pushed towards the barrier by atmospheric forces, e.g., when the assembly is taken from the chamber.

The surface of the first substrate and/or second substrate that face the low-pressure layer may be coated with a continuous hermetic coating layer, e.g., of an inorganic material, such as aluminum oxide, to reduce the rate of gas permeation into the low-pressure layer; see, e.g., US patent US 8,950,162 B2, included herein by reference.

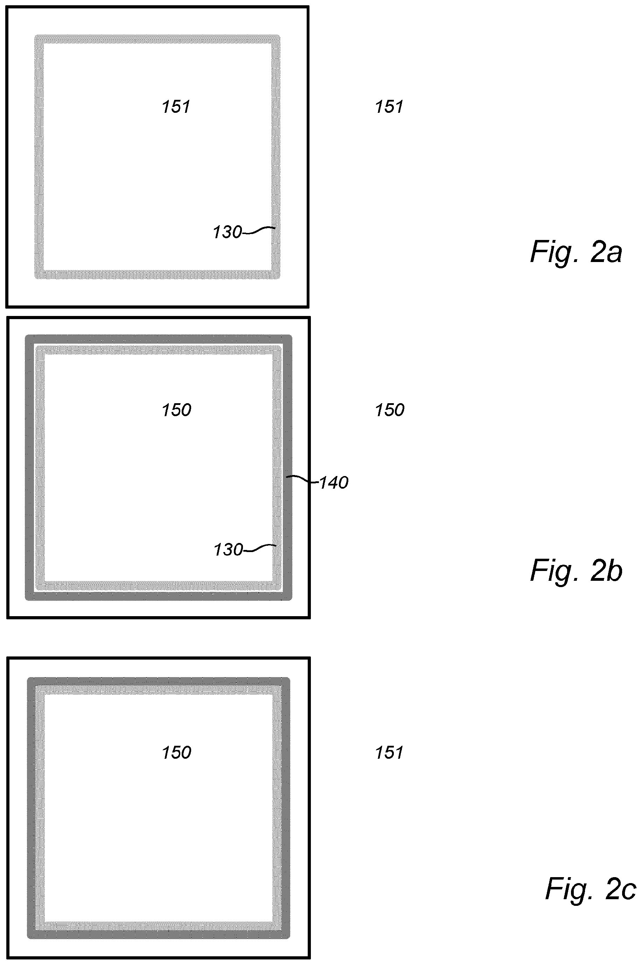

**Figure 2a** schematically shows a top view of an example of an embodiment of vacuum insulated glass outside a low-pressure chamber,
**Figure 2b** schematically shows a top view of an example of an embodiment of vacuum insulated glass in a low-pressure chamber,
**Figure 2c** schematically shows a top view of an example of an embodiment of vacuum insulated glass outside a low-pressure chamber.

Figures 2a-2c show an improved process according to an embodiment. Figure 2a shows a first substrate of the substrates. A sealant barrier 130 has been applied around a perimeter of a surface of the first substrate. Figure 2b show the assembled and pressed together assembly in the low-pressure chamber. A sealant has been applied between the two substrates, on the outside of the sealant barrier. Within the low-pressure chamber a low-pressure is maintained both inside the assembly of the two substrates and outside the assembly. Figure 2c show the assembly outside the low-pressure chamber wherein the assembly is exposed to atmospheric pressure 151. Note that even if the sealant is uncured, the sealant keeps its integrity, as the atmospheric pressure will push sealant 140 against sealant barrier 130. As a result low-pressure 150 is maintained inside the vacuum glazing.
Figure 3a.1 schematically shows a side view of an example of an embodiment of making vacuum insulated glass,
Figure 3a.2 schematically shows a top view of an example of an embodiment of a substrate in vacuum insulated glass,
Figure 3a.3 schematically shows a side view of an example of an embodiment of vacuum insulated glass.

Shown in figure 3a. 1 is a first substrate 310 and a second substrate 320. The two substrates are shown before pressing together. The substrates each have a surface and are orientated with the surface facing each other. Typically, first substrate 310 and second substrate 320 are both transparent. For example, the first and/or second substrate may be made from glass and/or plastic.

The transparency of the substrates, while typical, is not necessary. For example, materials such as frosted glass or other translucent or opaque substrates may be used while maintaining thermal insulation.

On first substrate 310 a sealant barrier 330 is applied around a perimeter of the surface of the first substrate. A sealant 340 is applied on the surface of the first or second substrate. In the shown example, sealant 340 is applied on the surface of the first substrate. In the example shown, sealant 340 is outside of sealant barrier. Figure 3a.2 shows a top view of first substrate 310.

The first substrate 310 and second substrate shown in figure 3a.1 are introduced into a low-pressure chamber, where they are pressed onto each other. After the pressing, the sealant has been applied around the perimeter of the surface of the first and second substrate outside the sealant barrier. Before the pressing, sealant may have been applied only to one of first and second substrate, e.g., in figure 3a. 1 sealant is only applied on first substrate 310. However, after the pressing, typically the sealant is applied to both first substrate 310 and second substrate 320. For example, after the pressing the sealant contact both of substrates 310 and second substrate 320.

Typically, the sealant is liquid at least during the application of the sealant on a substrate. After the pressing the liquid sealant may be cured, although this is not necessary.

Figure 3a.3 show a side view of the vacuum glass assembly after the pressing. Sealant 340 seals a low-pressure layer 351 that extends between first substrate 310 and second substrate 320. Sealant barrier 330 maintains an integrity of sealant 340 after the sealant is exposed to atmospheric pressure outside the low-pressure chamber. Sealant barrier 330 is rigid, or at least sufficiently rigid to withstand atmospheric pressure.

Sealant 340 preserves the low-chamber layer 351 after the assembly is removed from the low-pressure chamber. Preferably, sealant 340 also binds the first substrate 310 and second substrate 320 together. For example, this may be done because sealant 340 adheres to both first substrate 310 and second substrate 320. Sealant 340 may be cured to preserve both the binding and to preserve the seal on the low-pressure chamber, but this is not necessary. For example, in an embodiment, the sealant remains liquid after removing from the low-pressure chamber. In that case, the binding the two substrates together may be done by capillary forces, or the like. Other means of binding may also be employed. It is then advantageous to use a low viscosity sealant with adapted surface tension to improve adhesion to the surface. Precuring the sealant before assembly has the disadvantage of limiting the insulation level as well as using a more viscous material. Such material will be processable without sealant barrier but will provide a lower level insulating to vacuum. Using low viscosity sealant combined with a sealant barrier improves the ability to create a strong insulating barrier to vacuum. Moreover, this allows using the one drop filling machine, without the necessity of a presence of a vacuum plug. Insulating properties integrity are improved.

Preferably, sealant 340 performs two functions: binding the substrates together and sealing the interior of the assembly. This is not necessary though, binding the substrates together may be done by a further binding between the two substrates, e.g., applied on the sides of the assembly, e.g., in the form of a further seal 344 described inter alia with respect to figure 4.

**Sealant barrier.** Several variations are possible for the sealant barrier. As shown in figure 3a.3, the sealant barrier may determine a cell gap 311 between first substrate 310 and second substrate 320. The cell gap 311 is the distance between the first substrate 310 and second substrate 320, at least locally at the sealant barrier-atmospheric pressure may push first substrate 310 and second substrate 320 together away from the sealant barrier. As shown the sealant barrier is aligned with and touches both first substrate 310 and second substrate 320, after the pressing. As discussed herein, this is not necessary.

In the example, shown the sealant barrier forms a contiguous ring around the perimeter of the first surface. Should there be large gaps in the sealant barrier, then sealant would push into the gap. However, it is not necessary for the sealant barrier to form a contiguous ring, but may be perforated at places. If the perforations are sufficiently small this will still prevent the seal from rupturing and the sealant from entering, e.g., streaking into the low-pressure layer. In fact, if the bonding is achieved at least in part using capillary forces, using a perforated sealant barrier may be advantageous. The penetration of the sealant into the sealant barrier at such scale may reinforce the insulating properties of the device. In an embodiment, the sealant penetrates into the perforations but does not enter the low-pressure layer.

There are several ways to form the sealant barrier on first substrate 310.

An advantageous method is to apply the sealant barrier onto the first substrate using a photolithography process. This approach can also be used to apply spacers to the first substrate, which is advantageous to maintain the cell gap, especially for larger vacuum insulated glass.

It is particularly advantageous to manufacture the sealant barrier together with the spacer by photolithography. For example, this may be used to ensure that the height of the sealant barrier is the same as the photo spacers. Additionally, using photolithography enables the creations of microstructure on the sealant barrier to ensure stronger insulation properties. The use of microstructure can maintain the permanent insulating liquid in position and therefore ensure constant obstructions of cured sealant and sealant barrier interstice at molecular level to reinforce the insulating properties.

The sealant barrier may be applied onto the first substrate using a curable material for the sealant barrier. For example, the curable material may be applied onto the first substrate and cured to form the sealant barrier. This is done before introducing first substrate 310 and second substrate 320 into the low-pressure chamber. Yet another possibility for creating a sealant barrier 330 on first substrate 310 is by an imprinting process, embossing process, and/or etching process.

An especially advantageous process for the sealant barrier is to use a UV-curable material. For example, one may apply the UV-curable material on first substrate 310, and expose the UV-curable material to ultraviolet (UV) light through a photomask to cure the sealant barrier. After removing uncured material, the substrate may be used to form the vacuum glass, e.g., a sealant may be applied on the first or second substrate, and the substrates may be combined in the low-pressure chamber. This process allows accurate control over the dimensions of the sealant barrier.

Typically, the sealant barrier is applied onto the first substrate, before introducing first substrate 310 and second substrate 320 into the low-pressure chamber.

**Sealant.** Several variations are possible for the sealant.

In an advantageous choice, the sealant comprises a UV-curable material. The sealant may be cured by exposing the UV-curable material to ultraviolet (UV) light. Typically curing of the sealant is performed outside the low-pressure chamber. Various choices are available for a UV curable sealant. For example, the sealant may comprise a UV-curable resin selected from the group consisting of epoxy-based, acrylic-based, polyurethane-based, and silicone-based resins.

For example, the sealant may comprise a temperature-curable material. The sealant may be cured by subjecting the temperature-curable material to a controlled heating process.

For example, the sealant may comprise a pressure-curable material, the sealant may be cured by applying a predetermined pressure to the pressure-curable material. An advantage of this approach is that the curing or at least part of it may take place in the low-pressure chamber using the pressing together of the first and second substrates. Yet, another approach to create the sealant barrier is by having the sealant undergo cross-linking to become rigidified.

A well-defined height of the sealant barrier is advantageous. For example, the height of the sealant barrier may be equal to the cell gap. Although, in an embodiment the sealant barrier may be less than the cell gap. Nevertheless, fluctuations in the height of the sealant barrier can be tolerated. A small perforation may allow some of the sealant to penetrate into or even beyond the sealant barrier, but will typically not cause a complete loss of the low-pressure layer.

Note that the cell gap may also be controlled in other ways. For example, spacer particles may be mixed in the sealant, e.g., ball spacers may be mixed in the sealant. For example, spacers may be applied on the first and/or second substrate, e.g., across an interior part 351 inside the sealant barrier.

Although curing the sealant is an advantageous embodiment, it is not necessary to cure the sealant. In an embodiment, part or all of the sealant may remain uncured.

There are various ways in which the sealant may be applied. Typically, sealant 340 is applied before pressing first substrate 310 and second substrate 320 onto each other. If the sealant is cured, then this is typically performed outside the low-pressure chamber, though that is not strictly necessary.

Typically, the sealant is applied to a substrate before introducing that substrate into the low-pressure chamber, although that too is not strictly necessary; a low-pressure chamber may be adapted to apply the sealant while the substrate is introduced in the chamber.

In the example shown in figure 3a.2, the sealant 340 is applied on the surface of the first substrate outside the sealant barrier. There are many variations possible, however. For example, sealant 340 may be applied on the second substrate instead. For example, part of sealant 340 may be applied inside and/or on top of sealant barrier 330.

In the embodiment shown in figure 3a. 1, both the sealant 340 and the sealant barrier 330 are applied

In some embodiments, the sealant barrier is a contiguous ring around the perimeter of the first substrate's surface, wherein the sealant does not penetrate the barrier but instead is positioned adjacent and external to the barrier. However, in alternative embodiments, the sealant barrier is a perforated ring having perforations which allow the sealant to partially penetrate the perforations of the sealant barrier. Nevertheless, the majority of the sealant remains outside of the barrier. For example, in both cases, the sealant may be closer to the perimeter than the sealant barrier, at least on average.

In the low-pressure chamber, the first and second substrates are typically arranged horizontally. Either one of the first and second substrates may be the top substrate or the bottom substrate. In a preferred arrangement however, the first substrate 310, e.g., having sealant barrier 340, and having the sealant 330 applied to it, is arranged as the top substrate. The opposite second substrate 320 is then arranged as the bottom substrate. Note this is the other way round than it shown in figure 3a. 1

In an embodiment, the viscosity of liquid sealant 330 is sufficient to allow it to be introduced on the underside of the top substrate, without premature dripping of sealant from first substrate 310 having sealant 330 onto the bottom substrate.

In an embodiment, a further sealant is applied on the surface of the first or second substrate, wherein the further sealant is applied around the perimeter. For example, a first and second sealant may be used, possibly of a different type. For example, the first sealant may not be curable, e.g., not UV-curable, and may be left liquid, e.g., to make use of capillary forces, while the second sealant may be curable, e.g., UV-curable, and may be cured. For example, the second sealant may be applied inside of the sealant barrier, the further sealant being further from the perimeter than the sealant barrier. Optionally the further sealant is cured.

**Cell gap.** In an embodiment, the cell gap is at most 50 mm, or at most 1 mm, or at most 0.5 mm, or at most 0.1 mm, or at most 0.01 mm. In an embodiment, the cell gap is at least 1 micron and at most 500 micron, preferably, at least 20 micron and at most 100 micron, preferably, at least 20 micron and at most 50 micron. In an embodiment, a sealant barrier width is at least 40% and at most 200% of the cell gap, preferably, at least 75% and at most 125% of the cell gap.

**Low-pressure layer.** The low-pressure layer reduces heat conduction across the cell gap between first substrate 310 and second substrate 320. By sealing a low-pressure layer between two substrates a thermal barrier is created that reduces heat conduction between the substrates. Vacuum insulated glass is useful in applications requiring thermal insulation, such as in energy-efficient windows for buildings and temperature-controlled environments in vehicles, e.g., cars. For example, the low-pressure layer may have a pressure of at most 1 Pa, or at most 0.1 Pa, or at most 0.05 Pa.
Figure 3b.1 schematically shows a side view of an example of an embodiment of making vacuum insulated glass,
Figure 3b.2 schematically shows a top view of an example of an embodiment of a substrate in vacuum insulated glass,
Figure 3b.3 schematically shows a top view of an example of an embodiment of a substrate in vacuum insulated glass.

Figures 3b show one of the variants of figures 3a. The options described with respect to figures 3a also apply to Figures 3b.

Shown in Figures 3b is a sealant barrier 331 on first substrate 310, which does not, on its own, define the cell gap. A height of sealant barrier 331 is less than the cell gap. However, on second substrate a further sealant barrier 332 is applied that aligns with the sealant barrier 331 once the substrates are pressed together. The height of barriers 331 and 332 together define the cell-gap. To compensate for alignment errors, the width of barriers 331 and 332 may be somewhat increased compared to the situation in figures 3a.

Figures 3b.2 shows substrate 310 before pressing, and figure 3b.3 shows substrate 320 before pressing.
Figure 3c.1 schematically shows a side view of an example of an embodiment of making vacuum insulated glass,
Figure 3c.2 schematically shows a top view of an example of an embodiment of a substrate in vacuum insulated glass,
Figure 3c.3 schematically shows a top view of an example of an embodiment of vacuum insulated glass.

Figures 3c show one of the variants of figures 3a. The options described with respect to figures 3a and the other figures also apply. Figures 3c show a perforated sealant barrier 333. Sealant barrier 333 forms a perforated ring around the perimeter of the first surface. Although the ring is perforated, if the perforations are small enough this will still maintain the integrity of the sealant. The width 312 of the perforations that can be tolerated depend on the sealant material, e.g., its viscosity. The exact dimension of the perforations that can be tolerated can be determined empirically, e.g., by repeating the process for different perforation widths. However, as a rule, the perforations in the perforated ring have a width of at most 1 mm. Larger perforations could nevertheless be accepted for sealants width sufficiently high viscosity. For example, a curing of the sealant may be completed before the seal's integrity is impaired.
Figure 3d.1 schematically shows a side view of an example of an embodiment of making vacuum insulated glass,
Figure 3d.2 schematically shows a top view of an example of an embodiment of a substrate for vacuum insulated glass,
Figure 3d.3 schematically shows a top view of an example of an embodiment of a substrate for vacuum insulated glass.

Figures 3d show one of the variants of figures 3a. The options described with respect to figures 3a and the other figures also apply.

Shown in figures 3d are further spacers are arranged between first substrate 310 and second substrate 320. Shown are spacers 334 on first substrate 310. Spacers 334 could also be arranged on second substrate 320. The shown spacers have a height equal to the cell gap. It is possible to have a spacer with a different height than the cell gap; for example, a first spacer on the first substrate may align with a second spacer on the second substrate, so that after pressing the first spacer and second spacer together create a spacer defining a cell gap.

Having spacers is advantageous as atmospheric pressure tends to press the first and second substrates together. This effect depends on the size and stiffness of the substrates. It also depends on the thermal insulation as the spacer will conduct heat better than vacuum. Limiting the total contact area on the glass is therefore desired. Using spacers created by photolithography enables not only a low visibility of the spacers but also an improved distribution to maintain the mechanical distance between the substrates and the thermal conduction via the spacers. The desired number of spacers, their shapes, and their sizes will differ pending on the cell gap, the glass size, the substrate rigidity, the vacuum level and the total thermal conduction via the spacers. As an example, in an embodiment, a possible spacer distribution has at least 1 spacer per mm2.

Advantageously spacers are formed using a photolithography process, e.g., as is also possible for the sealant barrier. Spacers and sealant barrier could be formed in the same process, e.g., the same photolithography process.

For example, a photosensitive material may be applied to one or both of the first and second substrates where spacers and/or the sealant barrier are required. The substrate is then exposed to ultraviolet light through a mask that defines the patterns of the spacers and/or the sealant barrier. After exposure, the unexposed areas of the photosensitive material may be washed away, leaving precisely formed spacers and a sealant barrier that align accurately with the designated perimeter or areas on the substrates. Photosensitive material can be applied using various methods to ensure a consistent and controlled height, such as spin coating, dip coating, spray coating, and meniscus coating.

Spacers, such as photo spacers, may be arranged across the surface of only the first substrate, only the second substrate, or both. The technologies described for the sealant barrier may also be used to create the spacers.

In the material used to create the spacers one can mix-in spacer particles, e.g., ball spacers.
Figure 3e.1 schematically shows a top view of an example of an embodiment of a substrate for vacuum insulated glass,
Figure 3e.2 schematically shows a side view of an example of an embodiment of making vacuum insulated glass,
Figure 3e.3 schematically shows a side view of an example of an embodiment of making vacuum insulated glass.

Figures 3e show one of the variants of figures 3a. The options described with respect to figures 3a and the other figures also apply.

Figure 3e. 1 shows a first substrate 310 having applied thereon multiple sealant barriers; shown are a first sealant barrier 335, and a second sealant barrier 336. For example, the multiple sealant barriers may be arranged as multiple nested sealant barriers applied around a perimeter of a surface of the first substrate and/or the second substrate. Between adjacent sealant barriers a channel may be formed for receiving sealant.

For example, the multiple sealant barriers may be arranged as multiple concentric sealant barriers applied around a perimeter of a surface of the first substrate and/or the second substrate.

In the shown case, first sealant barrier 335 and second sealant barrier 336 are applied to the first sealant barrier, but this is not necessary; one could be applied to first substrate 310 and the other to substrate 320. More than two sealant barriers is also possible. First sealant barrier 335 and second sealant barrier 336 are nested and also concentric. Concentric is not necessary, two or more sealant barriers may be eccentric.

The sealant is enclosed in a volume between two consecutive sealant barriers of the multiple nested sealant barriers and first substrate 310 and second substrate 320.

In figure 3e.1 the multiple sealant barriers are formed on the same substrate 310, but this is not necessary. One or more sealant barriers could be formed on first substrate 310 and one or more sealant barriers could be formed on second substrate 320. The sealant is applied on the surface of the first or second substrate, before the pressing, so that after the pressing at least part of the sealant fills the channel. Note that part of the sealant may also end up outside the nested sealant barriers, e.g., outside barrier 336; Note that part of the sealant may also end up inside the nested sealant barriers, e.g., inside barrier 335. Preferably, and in embodiments, the sealant does not end up inside the most inner one of the nested sealant barriers, e.g., inside the low-pressure layer; however, in some applications some spillage may be tolerated, especially if the spilled sealant is cured.

When the sealant is received in a channel formed between two adjacent nested sealant barriers, the sealant may be cured, e.g., as described herein. However, it is also possible not to cure the sealant, or not fully cure the sealant, e.g., to keep the sealant in a fluid state. The fluid state may be, e.g., a liquid, a viscoelastic fluid, e.g., a gel, or paste, etc. In an embodiment, a low vapor pressure liquid is used for the sealant.

In an embodiment, multiple nested barriers are attached to at least one of the substrate, a sealant is applied in a channel formed between two adjacent nested sealant barriers, wherein first and second substrate are bonded together by capillary forces. For example, capillary forces may be promoted by making a distance between two nested sealant barriers is small, e.g., a width of the channel. The sealant may remain liquid all the time, with no need to cure. Not having to cure is an advantage as it speeds up manufacturing, and also simplifies manufacturing by eliminating a processing step. Forming a channel filled with liquid creates a force that holds the opposing surface, e.g., binds the two surfaces. Binding the substrates together is not strictly necessary, as other means could be used for the binding, e.g., a further sealant like glass solder. The liquid sealant may still function to seal the low-pressure layer.

In an embodiment, the sealant as applied is a low vapor pressure liquid having a vapor pressure of most 1.34 · 10³ Pa at 25°C, preferably, at most 1 · 10² Pa at 25°C, more preferably, at most 1 · 10¹ Pa at 25°C.

Liquids with low vapor pressures provide increased and durable bonding and/or sealing.

Figure 3e.2 shows that sealant 341 could be provided in the channel between the nested sealant barriers before the pressing. The sealant could instead, or in addition, be provided on the second substrate, e.g., opposite the nested barriers, as shown in figure 3e.3. It may be the case that some of the sealant after the pressing is also applied outside the nested barriers. This is not a problem as the liquid sealant will naturally fall away, or could actively be removed. If sealant is produced inside the low-pressure channel it may be cured. On the other hand, if the amount sealant in the inner side of a sealant barrier is sufficiently low, it may adhere to the side of the sealant barrier without harm. Even if some amount of sealant were admitted in the low-pressure layer, this can be tolerated, especially if the sealing function is not impaired.

Figures 3f show various options for arranging the sealant and sealant barrier, before and after pressing. The options described with respect to figures 3a and the other figures also apply.

Figure 3f.1 schematically shows a side view of an example of an embodiment of making vacuum insulated glass. Shown in figure 3f. 1 are three nested sealant barriers. Two sealant barriers are arranged on first substrate 310, and one sealant barriers is arranged on second substrate 320. After pressing, the sealant barrier on substrate 320 fits between the nested sealant barriers on first substrate 310. Figure 3f.2 schematically shows a side view of an example of an embodiment of making vacuum insulated glass. Shown in figure 3f.2 are four nested sealant barriers. Two sealant barriers are arranged on first substrate 310, and two sealant barriers are arranged on second substrate 320. After pressing, the sealant barriers on substrate 320 fit between the nested sealant barriers on first substrate 310. In the example shown the sealant barriers on the two substrates alternate. This is not necessary.

Figure 3f.3 schematically shows a side view of an example of an embodiment of making vacuum insulated glass. Shown in figure 3f.3 are three nested sealant barriers on first substrate 310. On second substrate 320 are amount of sealant 342 is arranged in a ring around the perimeter of second substrate 320. After pressing the figure 3f.4 is obtained. Sealant 342 fills the multiple channels, in this case, formed between the multiple nested sealant barriers. In this case some sealant is also applied, after pressing, outside the nested sealant barriers, as well as inside the sealant barriers. In an embodiment, sealant may be applied outside, but not inside, or inside but not outside, or neither.

Depending on the positioning of the sealant barrier(s) and the sealant some amount of sealant may end up in the vacuum layer. Figure 3f.4 shows that a small part of the sealant ends up in the vacuum layer. This usually undesired. If the liquid is volatile, it might reduce the vacuum level and some negatively impact the optics. If this is unacceptable there are various ways to deal with this. The positions of sealant and sealant barrier before the pressing may cooperate to reduce the amount of sealant ending up in low-pressure layer 351; in an embodiment, the amount of sealant may be reduced to zero. Another approach, is to reduce the vapor pressure; if the vapor pressure is very low, then the material will remain in place. Finally, the sealant material, at least the material inside low-pressure layer 351 may be cured.

In an embodiment, the further sealant is applied on the surface of the first or second substrate, e.g., a first and second sealant. The first and second sealant may be of different types. For example, a first sealant may be applied in a channel, and may be uncured, while the second sealant may be outside the channel, e.g., outside the barriers, on inside in the low-pressure layer. The second sealant may be cured. Any type of curing may be used; UV-curing being an advantageous choice.

In an embodiment, the sealant is applied on a surface of the sealant barrier between the sealant barrier and the second substrate, e.g., also applied there. For example, the arrangement of figure 3f.3 and 3f.5 has the effect of depositing sealant on top of a sealant barrier. Optionally, such sealant on top of the sealant barrier may be cured. For example, a UV-curable or pressure-curable sealant may be used.

Multiple types of sealant materials may be used. For example, in an embodiment with multiple channels, or tranches, between two sealant barriers, different types of sealant materials may be used. For example, in an embodiment, one of the sealants may be a water absorbing sealant to create a humidity buffer. Moreover, this structure enables the use of two insulating liquids wherein one of them is used as the sealant and the other one is a permanent insulating liquid.

In an embodiment, a different type of sealant is applied in different channels. One of the sealants may be cured, e.g., UV cured, while the other stays liquid. This combines the sealing properties of a liquid seal with the binding properties of a cured seal.

In an embodiment, two sealants are used that react together when combined, possibly upon contact, possibly after curing. For example, the sealants may be a 2 component glue. For example, a first type of sealant may be applied on the first substrate while a second type of sealant may be applied on the second substrate; after pressing the two types of sealant combine and cure; possibly directly, possibly after curing, e.g., UV curing.

In an embodiment, two sealants are used that react together when combined, upon contact. They may be used in adjacent channels, e.g., as in an embodiment with multiple sealant barriers, e.g., as shown in figures 3e or 3f. In this case, the two liquid sealant are separated by a sealant barrier, but if they diffuse through pores and/or interstices and the like the liquid cures and solidifies.

For example, for reacting sealants one may use, for example, a system, such as a reactive resin system, in which the two or more components undergo a reaction to become rigid or solidify, upon contact. The system may be a two-component system, a binary system, a resin and hardener system, etc. The system may involve cross-linking polymers, etc., causing hardening or solidifying.

Figure 3f.5 schematically shows a side view of an example of an embodiment of making vacuum insulated glass. In this arrangement, multiple nested sealant barriers are arranged on the first barrier, in this case three sealant barriers. Sealant 343 is applied outside the nested barriers before the pressing. Figure 3f.6 shows the situation after pressing: sealant 343 is spread out over the channels formed between the multiple nested barriers, with some sealant 343 being applied outside the nested barriers and some inside of the nested barriers.

In an embodiment, the sealant barrier comprises a plurality of alternating protrusions and recessions along at least part of its perimeter. For example, Figure 3g.1 show a sealant barrier 337, which has along its perimeter a repeating pattern of alternating protrusions and recessions, in the shown example, in the form of a square wave. The repeating pattern could be triangular, many other possibilities exist.

The sealant barrier could also exhibit various other geometric configurations to enhance the effectiveness of the vacuum seal. For instance, a zigzag pattern may be used. Additionally, the protrusions and recessions could be shaped in half-circles or sine waves, which may facilitate a more uniform distribution of sealant and pressure along the barrier.

The plurality of protrusions and/or the plurality of recessions may have varying depths and widths.

The plurality of alternating protrusions and recessions may also be shaped in a more intricate pattern, e.g., using a random sequence of alternating protrusions and recessions, e.g., as shown schematically in figure 3g.2**.**

The sealant barrier may be micropatterned and may comprise a microstructure.

It is particularly advantageous to perform the sealant barrier by photolithography, possibly together with spacers in the assembly. Using photolithography sealant barrier may be shaped with a microstructure which improves the insulation properties.

Figure 3g.3 schematically shows a top view of an example of an embodiment of vacuum insulated glass. Shown in figure 3g.3 is a sealant barrier 337 having a microstructure. As in other embodiments, the sealant 347 is pressed against sealant barrier 337 through atmospheric pressure. Note that the increase in surface of the sealant barrier improves the sealing. The outer perimeter of the sealant 347 is shown as straight, but may in practice be less so.

A microstructured sealant barrier, e.g., having a plurality of alternating protrusions and recessions may be used in the various other embodiments as well including with cured and uncured, e.g., liquid sealants, e.g., as shown in figures 3a-3f.

**Figure 4** schematically shows a side view of an example of an embodiment of vacuum insulated glass. Shown in figure 4 is the situation after pressing and in this case also after curing. Shown in figure 4 is a sealant barrier 330, sealant 340, and low-pressure layer 351. For example, the arrangement of figures 3a could be used, any of its variants, e.g., the arrangements shown in the other figures. Shown in figure 4 is a further seal 344 which is applied around the vacuum insulating glass. For example, the
- the further seal may comprise glass solder
- the further seal may comprise a thermoplastic adhesive,
- the further seal may be obtained by melting together first substrate 310 and second substrate 320.

A further seal 344 may help the bonding between the first and second substrate. For example, bonding force may primarily be supplied by the further seal while sealing the low-pressure layer may be primarily supplied by seal 340.

In an embodiment, the vacuum insulated glass assembly may be cured after pressing. After curing the further sealing may be applied. In an embodiment, the further sealing is applied after pressing but before curing. Curing is optional, e.g., in case capillary bonding is used.

**Figure 5a and 5b** each schematically shows a side view of an example of an embodiment of vacuum insulated glass and a light modulator. Figures 5a and 5b show a light modulator with vacuum insulated glass. Other embodiments of the vacuum insulated glass may be applied instead, e.g., those described with references to figures 3a, or any of the other figures.

Figure 5a shows a first substrate 310 and second substrate 320 that form a vacuum isolated glass assembly as in an embodiment. A third substrate 360 is provided in parallel to either one of the first and second substrates, in the example shown adjacent to the second substrate 320. Typically, the third substrate 360 is transparent, e.g., glass or plastic.

Between second substrate 320 and third substrate 360 an optical layer 352 is arranged. For example, optical layer 352 may comprise charged or chargeable particles that may be spatially modulated using an electric field. To modulate the electric field and thus the particles one or more electrodes are arranged in the optical layer. Typically, multiple electrodes are provided, and are shown here in cross section. One such electrode is provided with a reference numeral 362.

In an embodiment, the electrodes are arranged on a surface of third substrate 360 facing the optical layer 352, and/or on a surface of the vacuum insulated glass, in this case substrate 320. Note that third layer 360, and optical layer 352 could equally well have been placed next to first substrate 310, in which case substrate 310 could be used for electrodes.

An advantageous arrangement uses at least two electrodes on each surface, e.g., on surface 360 and/or surface 320. The at least two electrodes are alternating on the surface, e.g., they are interdigitated. An advantageous arrangement uses at least four electrodes, with at least two electrodes on each surface, e.g., on surface 360 and/or surface 320.

Note that one of the substrates of the vacuum insulated glass, in this case substrate 320, is shared between the light modulator and the vacuum insulated glass. For example, the vacuum insulated glass may be formed by first substrate 310, low-pressure layer 350, and second substrate 320, while the light modulator may be formed by second substrate 320, optical layer 352 and third substrate 360.

Both vacuum insulated glass and light modulator may be formed inside the low-pressure layer. For example, a method may comprise:
- introducing the first and second substrate into a low-pressure chamber, pressing the first and second substrate onto each other,
- arranging an optical layer on the pressed together first and second substrate,
- introducing the third substrate into the low-pressure chamber, binding the third substrate to the pressed together first and second substrate.

Spacers may be arranged in the optical layer, which are not shown in figure 5a, e.g., on the surface of substrate 320 and/or 360. Substrates 310, 320, and 360 may be introduced in the low-pressure chamber at the same time, or the low-pressure chamber may be opened to allow the introduction of an additional substrate.

The order in which the substrates are introduced may be different. For example, in an embodiment, first third substrates 360 and 320 are introduced, and the light modulator part is formed, after which the first substrate 310 is introduced and the vacuum insulated glass part is formed.

After forming the vacuum insulated glass and the light modulator, sealant may be cured, and a further seal may be applied around the vacuum insulated glass and the light modulator, e.g., glass solder or the like.

Various other layers may be combined with vacuum insulated glass according to an embodiment, e.g., a light modulator, a photovoltaic stack, a display, etc.

In figure 5a, substrates 310 and 320 may be interchanged. In an embodiment, a substrate is shared between light modulator and vacuum insulated glass, in this case substrate 361. Substrate 361 is not used in figure 5a.

Figure 5b shows a variant in which an additional substrate 361 is introduced between light modulator and vacuum insulated glass. This additional substrate 361 allows the separate forming of the light modulator and vacuum insulated glass before combining them.

Typically, substrates 310, 320, 360, 361 are transparent in figure 5a and figure 5b. Figures 5a and 5b show a light modulator with a single low-pressure layer arranged next to it, it is possible to arrange a low-pressure layer on both sides of the light modulator. In the latter case, arrangement may comprise only 4 substrates, as each of the low-pressure layers and light modulator may share a substrate.

A light modulator as in an embodiment may be advantageously combined with a light modulator in various ways. Below various types of light modulators are discussed than can be combined with vacuum insulated glass.

In an embodiment, a light modulator is provided with a low-pressure layer. Combining the low pressure layer with a light modulator is advantageous as it reduces the number of substrates and processing steps. If the low-pressure layer is arranged facing the outside of a building, while the light modulator is arranged facing the inside of a building, then heat generated in the light modulator is not lost to the outside environment but benefits heating the interior. On the other hand, in environments where cooling is the predominant function of climate control, the arrangement could be reversed to avoid that the light modulator heats the inside. Furthermore, the light modulator allows for the control of light and heat passing through the glass. It can adjust its transparency or shading coefficient based on the intensity of incoming light or according to specific environmental conditions. This feature, combined with the thermal properties of VIG, provides Adaptive Thermal Regulation. By modulating the amount of solar heat passing through, smart glazing can work in tandem with the insulating properties of VIG to maintain consistent interior temperatures, thus reducing the load on HVAC systems.

Dynamic glazing, also known as smart glazing, may comprise a system wherein the transparency or optical properties of a glazing material are altered in response to an external electrical input. This system may allow for active control over light and heat transmission, thereby enhancing energy efficiency and user comfort in various architectural or vehicular applications. Advantageously, the dynamic glazing is combined with a low-pressure layer.

Figures 6a-9c provide various examples of the electrode system on the first and second substrate and how they may be implemented or used in a light modulator.

Some of the known light modulators which may be provided with a low-pressure layer are based on the electrophoretic principle. For example, the substrate may comprise multiple interdigitated electrodes applied to the substrate, e.g., two electrodes, each of the multiple electrodes being arranged in a pattern across the substrate, the multiple interdigitated electrodes being arranged alternatingly with respect to each other on the substrate. Having multiple interdigitated electrodes allows local control over the electric field enabling electrophoretic control of particles.

Electrophoretic light modulators are explained more extensively herein and are used as the motivating example. In an embodiment, a light modulator comprises a first substrate and a second substrate. At least one of the first and second substrates may be according to an embodiment and may be provided with a low-pressure layer. For example, the first and second substrates may be arranged with inner sides opposite to each other, using a substrate according to an embodiment. An optical layer is arranged between the first and second substrates. The electrode is arranged to modulate an electrical field in the optical layer. The optical layer comprises a fluid, e.g., liquid, comprising particles, wherein the particles are electrically charged or chargeable. The particles may be moved under control of the electrical field. For example, a controller may be configured to apply an electric potential to the electrode to obtain an electric field at the electrode providing electrophoretic movement of the particles towards or from one of the at least one electrode causing modulation of the optical properties of the light modulator. For example, optical properties may include a transition between a high-transparent state and a low-transparent state or vice versa. Note that a transition may also alter thermal properties of the light modulator.

Below a number of known light modulators are reviewed, showing some of the options in technology and electrodes. These known light modulators can advantageously be combined with a low-pressure layer, optionally sharing a substrate between the vacuum-insulated part and light modulator part.

These examples also show light modulators with varying numbers of electrodes on a substrate.

International patent applications WO2011012499 A1 (included herein by reference) and WO2011131689 (included herein by reference) disclose light modulators in the form of electrophoretic display devices, e.g., e-Ink displays. A pixel of the display comprises an accumulation electrode and a field electrode, the accumulation electrode being arranged at a storage area for accumulating charged particles away from an aperture area, and the field electrode occupying a field-electrode area being at least a part of an aperture area of the pixel, the charged particles being movable between the accumulation electrode and the field electrode. In an embodiment, two electrodes are applied on a single substrate. These electrophoretic display devices may be provided with a low-pressure layer, e.g., arranged in parallel to the electrophoretic display device. The electrophoretic display devices and low-pressure layer advantageously may share a common substrate, although this is not necessary.

US patent 10921678 with title 'Electrophoretic device', included herein by reference, shows an electrophoretic device having only one patterned electrode on one of two substrates. For example, the one substrate with an electrode according to US 10921678 may be replaced with a substrate according to an embodiment comprising one single electrode. For example, an embodiment comprises a first transparent substrate with a field electrode and a second substrate opposite the first substrate, with an accumulation electrode. The first substrate and the second substrate enclose a pixel with a fluid and particles. In use, an applied electric field to the field electrode and the accumulation electrode provides movement of the particles from the field electrode to the accumulation electrode and vice versa. Any of these cited electrophoretic or dielectrophoretic light modulators may be adapted by including one or more low-pressure layers according to an embodiment.

US patent 8054535B2 (included herein by reference) and US patent 8384659b2 (included herein by reference) show alternative examples of electrophoretic light modulators in one of two substrates having two patterned electrodes.

Patterned electrodes are also used in dielectrophoretic light modulators. For example, US patent application US2005185104A1 (included herein by reference) and US20180239211A1 (included herein by reference) show dielectrophoretic light modulators having a substrate with a patterned electrode. Any of these cited electrophoretic or dielectrophoretic light modulators may be adapted by including one or more low-pressure layers areas according to an embodiment.

The paper "Reversible Metal Electrodeposition Devices: An Emerging Approach to Effective Light Modulation and Thermal Management," included by reference, also shows a substrate on which a patterned electrode is applied. A low-pressure layer according to an embodiment may be included herein.

An embodiment of a substrate may be used in an electrochromic device (ECD). An electrochromic device (ECD) controls optical properties such as optical transmission, absorption, reflectance, and/or emittance in a continual but reversible manner on application of voltage (electrochromism). This property enables an electrochromic device to be used for applications like smart glass, electrochromic mirrors, and electrochromic display devices. A low-pressure layer according to an embodiment may be included herein.

An electrochromic device is described, e.g., in the paper "Silver grid electrodes for faster switching ITO free electrochromic devices" by António Califórnia et al., included herein by reference. The paper describes the preparation of an electrochromic device, in this case, one which is ITO-free. A low-pressure layer according to an embodiment may be included herein.

An electrochromic device uses electrically conductive electrodes applied on a substrate. The cited paper uses silver grids, made using silver ink, as electrically conductive electrodes. An electrochromic device may comprise an electrochromic material. The cited paper uses poly(3,4-ethylenedioxythiophene) polystyrene sulfonate (PEDOT:PSS). In an electrochromic device, at least one electrode, e.g., the electrically conductive electrode, is applied to a substrate. The electrode being arranged in a pattern across the substrate. The cited paper discloses two different grid patterns: a regular hive and a regular ladder design. See table 1 and figure 3 of the cited paper. A low-pressure layer according to an embodiment may be included herein.

Electrodes may be applied to a substrate by screen-printing on a substrate, in the case of the cited paper, polyethylene terephthalate (PET). The electrodes are typically an electrically conductive material, e.g., a metal or metal oxide. In the cited paper, silver ink was used to screen print the grids on PET using a RokuPrint RP 2.2 equipment and a 180 wired mesh. The samples were allowed to dry in an oven at 130°C for 15 min. On top of these silver grids, one or two layers of PEDOT:PSS SV3 were posteriorly printed by screen printing. A low-pressure layer according to an embodiment may be included herein.

Another example of an electrochromic device is given in US patent 5161048, with title "Electrochromic window with metal grid counter electrode and acidic polyelectrolyte", included herein by reference. For example, an electrochromic device may comprise a transparent electrochromic film and an ion-conductive layer disposed between a pair of electrodes. The metal grid electrode is used for the electrodes. Figure 1 of the patent shows a metal grid according to the cited patent. To form the counter electrode, a metal grid is disposed adjacent to the second glass substrate.

For example, in an embodiment of an electrochromic device, the electrochromic device may comprise a transparent substrate, an electroconductive electrode member, a transparent electrochromic film in contact with said electroconductive electrode member, an ion-conductive polymer in contact with said electrochromic film; and a patterned conductive electrode in contact with said ion-conductive polymer. A low-pressure layer according to an embodiment may be included.

A substrate according to an embodiment can be beneficially applied in several other technologies. For example, the light modulator may be a dielectrophoretic light modulator, e.g., as shown in US20050185104 A1, included herein by reference. A low-pressure layer according to an embodiment may be included herein.

A substrate as in an embodiment may also be used in other electrowetting and OLED applications. In OLED and electrowetting, electrodes are needed on only one of the substrates. The substrate with electrodes may be according to an embodiment including a low-pressure layer.

Yet other dynamic glass technologies may be used.

For example, an optical layer for a light modulator, e.g., in dynamic glazing, may use LCD (Liquid Crystal Display) technology. For example, the optical layer may comprise liquid crystal molecules that can be aligned to control the amount of light passing through the display. When an electric current is applied to the liquid crystal molecules, they change their alignment and modify the way that light passes through the material. The optical layer with LCD material may be placed between two layers of glass or plastic and connected to an electrical circuit. By controlling the electric current applied to the LCD material, the amount of light passing through the glazing may be adjusted. A low-pressure layer according to an embodiment may be included herein.

An optical layer for a light modulator, e.g., in dynamic glazing, may use Suspended Particle Device (SPD) technology. The optical layer may comprise particles suspended within a thin film or laminate. By applying an electrical current to the SPD film, the particles align and modify the amount of light passing through the material, allowing for dynamic control of the glazing. When the electrical current is turned off, the suspended particles randomize and allow more light to pass through, creating a clear or transparent effect. When the electrical current is turned on, the particles align and absorb more light, creating a darker or tinted effect. A low-pressure layer according to an embodiment may be included herein.

In an application of the light modulator for glazing, both substrates are typically transparent. In other applications, e.g., in television, e-readers, etc., only one substrate may be transparent.

**Figure 6b** schematically shows an example of an embodiment of a substrate. The substrate is particularly useful for use in a light modulator, e.g., of a kind described herein. Across the substrate, an electrode system is applied in the form of multiple interdigitated electrodes. Shown in figure 6b are two interdigitated electrodes.

The motivating example use of the substrate is in an electrophoretic light modulator. Typically, an electrophoretic light modulator comprises at least two substrates, each having at least two electrodes at each of the substrates; this is not necessary though, for example, an electrophoretic light modulator may comprise a single substrate with 2 electrodes and an opposite substrate with 1 electrode. In any case, preferably, at least one of the substrates in the light modulator is according to an embodiment.

An embodiment of a light modulator comprises a first substrate according to an embodiment and a second substrate. The first and second substrates are arranged with inner sides opposite to each other. At least one electrode is applied to the inner side of the first substrate. An optical layer is arranged between the first and second substrates. A controller is configured to apply an electric potential to the at least one electrode causing modulation of the optical properties of the light modulator. One or both of the first and second substrates are transparent and/or translucent.

There are many different kinds of light modulators that use at least one electrode applied to a substrate. The optical layer and controller may be arranged to modulate optical properties using effects that depend on the potential on the electrode; examples include the dielectrophoretic effect and the electrophoretic effect. For example, optical modulation may comprise the modulation of particles arranged in the optical layer. The number of electrodes may range from one on a single substrate, to multiple electrodes on one or both substrates.

The optical layer arranged between the first and second substrates may comprise particles, e.g., suspended in a fluid. The controller may be configured to apply an electric potential to the electrodes causing the particles to move thus modulating the optical properties of the light modulator.

In an embodiment, the particles comprise electrically charged or chargeable particles, and the controller is configured to apply an electric potential to the electrode to obtain an electric field providing electrophoretic movement of the particles. In an embodiment, the electric field is arranged between at least two electrodes arranged on the same substrate or arranged on different substrates.

In an embodiment, the particles comprise dielectric particles, and the controller is configured to apply an electric potential to the electrode to apply an electric field gradient to the particles enabling the particles to be moved under the action of dielectrophoretic forces.

The controller may apply an electric signal to one or more of the electrodes. Embodiments that control dielectrophoretic forces may use a signal that comprises a DC signal and/or an AC signal. Embodiments that control electrophoretic forces may use a signal that comprises a DC signal and/or an AC signal.

Shown in figure 6b are two electrodes on the same surface. The two electrodes are indicated in figure 6b in two different dashing styles. There could be more than two electrodes on the same side of the substrate, e.g., to facilitate more fine-grained control of voltage differences across the substrate. The electrodes are applied to a same side of the substrate. Applying electrodes to a substrate may be done lithographically, e.g., using a mask representing the electrode(s) pattern. Electrodes may also be applied by embedding them in the substrate.

An electrode is electrically connected, e.g., has the same electric potential everywhere. An electrode may comprise a driving bus and main lines. At least, the main lines are interdigitated with main lines of a further electrode. Typically, the electrodes extend in a substantially straight line across the substrate, while the main lines are convoluted.

In an embodiment, the two substrates of a light modulator each have two electrodes arranged at their inner surface. Though, as mentioned, multiple electrodes on one or both substrates are not needed. For example, an embodiment of a light modulator comprises a first substrate and a second substrate. For example, the first substrate may comprise one electrode, the second substrate may not comprise electrodes. For example, the first substrate may comprise two electrodes, the second substrate may comprise one electrode. For example, the first substrate may comprise two electrodes, the second substrate may comprise two electrodes. For example, the first substrate may comprise more than two electrodes, the second substrate may comprise two or more electrodes.

Light modulators, wherein each substrate comprises two electrodes are used as a motivating example, though. Designs of substrates featuring two electrodes may be adapted to have a single electrode, e.g., by connecting the two electrodes, or by removing one of the electrodes. Adapting a substrate in such a manner may make it suitable for use in different technologies.

Each of the multiple electrodes is arranged in a pattern across the substrate. The multiple electrodes are arranged alternatingly with respect to each other on the substrate. Typically, an electrode comprises multiple main lines, that each stretch across the substrate. The main lines of the electrodes alternate, e.g., interdigitate. For example, in figure 6b the first electrode comprises main lines 611-614, and the second electrode comprises main lines 621-624. The electrodes are each driven by its driving bus. Figure 6b shows two driving buses: driving bus 610 and driving bus 620. The electrodes also serve to connect the main lines together. For example, in figure 6b, the driving bus 610 drives and connects main lines 611-614; and the driving bus 620 drives and connects main lines 621-624. There can be more main lines than the four shown in this example. The use of main lines is advantageous as it reduces the length of the electrodes, but it is not necessary. A design using only one main line per electrode is not impossible, though having multiple is advantageous.

The driving buses may be adapted to form a contact area to enable electrical connection to at least the one or more driving electrodes applied on the first substrate, e.g., a connection from outside the light modulator. This is not necessary, and a separate contact area, e.g., additional to driving buses 610 and 620 may be provided in an embodiment.

The multiple main lines of the first and second electrodes are arranged alternatingly with respect to each other on the substrate.

In this example, there are no other connections between the main lines of an electrode than through the common driving bus. In an embodiment, an electrode comprises a mesh electrode, that is, it may have additional electrical connections added between electrode lines of the same electrode. This increases the reliability of the electrode. Such additional connections typically cross an electrode line of another electrode, which may be resolved by placing the additional electrical connection in part on a different level with respect to the substrate than the electrode line being crossed. For example, one may place the entire electrodes at a different level than another electrode. In this way, additional connections may be placed without short circuits arising.

A motivating application for a substrate such as substrate 600 is in smart glazing, e.g., a light modulator, which may be applied in domestic housing, offices, greenhouses, cars, and the like. The level of transparency or reflectivity of the smart glazing can be adapted electrically. For example, in smart glazing, two substrates such as substrate 600 would be stacked so that the sides on which the two electrodes are applied face each other. A fluid with particles is enclosed between the two substrates. Smart-glazing embodiments are further discussed below. In an embodiment, electrodes, e.g., two or more electrodes are applied to one surface of each substrate. There could also be one, two, or more electrodes on the other surface of substrate 600, e.g., to facilitate stacking of three or more substrates. For example, substrate 600 may be used for substrate 360 and one of substrates 310 and 320.

Some embodiments below show examples of modulating a transparency or reflectivity level. Light modulators may be adapted for other optical effects. For example, if desired, embodiments could be modified to different levels of translucency instead of different levels of transparency. If desired, the type of particle that is used in an embodiment can be varied, e.g., to particles that differ in which wavelengths they absorb or reflect, and how specular or diffuse the reflection is. For example, in an embodiment, a light modulator can modulate different levels of reflection. Particles can also emit light. Stacking multiple optical layers further increases the possibilities.

Having two sets of alternating main lines is sufficient to provide electrically adaptable glazing; due to the alternating two sets, the electric field at any part of the substrate can be controlled as two opposite electrodes border the part from two opposing sides.

Interestingly, the pattern in which the electrodes stretch across the substrate may be created by multiple repeated building blocks. Shown in figure 6b, the electrodes on substrate 600 show four blocks: blocks 641, 642, 643, and 644 which are all substantially the same. The number of building blocks may be larger than four. The building blocks repeat in both directions across the substrate, e.g., a first direction 691, e.g., an x-direction, shown horizontally in the figure, and a second direction 692, e.g., a y-direction, shown vertically in the figure. Using building blocks is advantageous as it allows manufacture using a stepper machine; using building blocks is not necessary.

For example, **figure 6a** schematically shows an example of an embodiment of a building block 640. Building block 640 comprises multiple interdigitated electrodes extending in at least 2 directions across the building block. Shown in figure 6a are four electrodes: electrode 631-634. When the building blocks are repeated across a substrate in two directions, the electrodes in the building block will form the electrodes, e.g., form the multiple main lines of the electrodes.

The electrodes that are formed by repeating building blocks are connected to the driving buses. Typically, electrode lines in a building block are connected to electrode lines in neighboring blocks by merging corresponding electrode lines; this is not necessary though, between repeated building blocks, connection zones can be inserted that connect corresponding electrode lines.

This step can connect up multiple main lines together, thus forming a single electrode. Figure 6b shows two connecting zones 619 and 629 in which the main lines belonging to the same electrode are connected to driving bus 610 and driving bus 620, respectively.

**Figures 7a-7f** schematically show examples of substrates with interdigitated electrodes. These may be embodied on a substrate with two electrodes, e.g., by alternatingly connected electrodes. Figures 7a-7d may also be embodied on a substrate with multiple electrodes, e.g., by connecting in sequences of 3 or 4 or more electrodes.

Figures 7e and 7f show designs with two electrodes on the surface of the substrate. Either design could be modified to have only a single electrode on the surface of the substrate, e.g., by removing one of the two electrodes. For example, such a modified design could be used in a light modulator that uses a substrate with a single electrode.

The designs shown can be realized in a single plane, without having crossing electrodes. In particular, if these designs are connected to two driving buses, no crossing electrodes are needed. When more than two electrodes are used, or if more complicated electrode patterns are used, then crossing of the electrodes may be used, or may even become necessary. Such crossings are possible however for example, at the location where two electrode lines cross, a dielectric material may be arranged between the electrodes. For example, such an insulator may be deposited at the crossing location. For example, a first electrode is in a first plane of the substrate and a second electrode is in a second plane of the substrate.

Two substrates according to an embodiment may be combined to form a light modulator. The light modulator is particularly suited to glazing. An exemplary embodiment of a light modulator is shown below.

**Figure 8a** schematically shows an embodiment of a light modulator 10, which may be applied in smart glazing.

Reference is made to patent application PCT/EP2020/052379, which is included herein by reference; this application comprises advantageous designs for light modulators, which may be further improved, e.g., by including electrodes, building blocks, and/or substrates as explained herein.

Light modulator 10 can be switched electronically between a transparent state and a non-transparent state and vice versa, or between a non-reflective state and a reflective state and vice versa. Light modulator 10 comprises a first substrate 11 and a second substrate 12 arranged opposite to each other. On an inner side of first substrate 11, at least two electrodes are applied: shown are electrodes 13a, 13b. These at least two electrodes are together referred to as electrodes 13. On an inner side of second substrate 12, at least two electrodes are applied: shown are electrodes 14a, 14b. These at least two electrodes are together referred to as electrodes 14. One or more of substrates 11 and 12 may be provided with one or more contact areas to enable electrical connection to at least the one or more electrodes applied on the substrate(s).

A fluid 15 is provided between said substrates. The fluid comprises particles 30, e.g., nanoparticles and/or microparticles, wherein the particles are electrically charged or chargeable. For example, particles may carry a charge on their surface intrinsically. For example, the particle may be surrounded by a charged molecule. The fluid may be a liquid.

The electrodes are arranged for driving particles 30 to move towards or away from electrodes, depending on the electric field applied. The optical properties, in particular the transparency or reflectivity of the light modulator, depend on the location of particles 30 in the fluid. For example, a connection may be provided for applying an electric field to the electrodes.

At least one, but preferably both electrodes 13 and 14 are according to an embodiment, though they are shown schematically in the figures.

In an example, substrate 11 and substrate 12 may be optically transparent outside of the electrodes, typically >95% transparent at relevant wavelengths, such as >99% transparent. Taking electrodes into account, transparency can be much lower, e.g., 70%. The term "optical" may relate to wavelengths visible to a human eye (about 380 nm- about 750 nm), where applicable, and may relate to a broader range of wavelengths, including infrared (about 750 nm - 1 µm) and ultraviolet (about 10 nm-380 nm), and sub-selections thereof, where applicable. In an exemplary embodiment of the light modulator, a substrate material is selected from glass, and polymer.

In another example, one substrate, such as a bottom substrate 12, may be reflective or partially reflective, while the top substrate 11 is transparent. The optical properties, in particular the reflectivity of the light modulator, depend on the location of particles 30 in the fluid. When the panel is in the open state (vertical drive), the particles will mostly be located between opposite electrodes of the two substrates, such that incident light can pass through the transparent top substrate and the optical layer relatively unhindered and is reflected or partially reflected on the bottom substrate.

The distance between the first and second substrates is typically smaller than 30 µm, such as 15 µm. In an exemplary embodiment of the light modulator a distance between the first and second substrates is smaller than 500 µm, preferably smaller than 200 µm, preferably less than 100 µm, even more preferably less than 50 µm, such as less than 30 µm.

In an example, the modulator may be provided in a flexible polymer, and the remainder of the device may be provided in glass. The glass may be rigid glass or flexible glass. If required, a protection layer may be provided on the substrate. If more than one color is provided, more than one layer of flexible polymer may be provided. The polymer may be polyethylene naphthalate (PEN), polyethylene terephthalate (PET) (optionally having a SiN layer), polyethylene (PE), etc. In a further example, the device may be provided in at least one flexible polymer. As such, the modulator may be attached to any surface, such as by using an adhesive.

Particles 30 may be adapted to absorb light and thereby prevent certain wavelengths from passing through. Particles 30 may reflect light; for example, the reflection may be specular, diffusive, or in between. A particle may absorb some wavelengths and reflect others. Particles may also or instead emit light, e.g., using phosphorescence, fluorescence, or the like. Even the fluid may emit light, whose emittance is modulated by changing the location of particles.

In an exemplary embodiment of the light modulator, a size of the nanoparticles is from 20-1000 nm, preferably 20-300 nm, more preferably smaller than 200 nm. In an exemplary embodiment of the light modulator, the nanoparticles/microparticles may comprise a coating on a pigment, and preferably comprise a core. In an exemplary embodiment of the light modulator, the coating of the particles is made from a material selected from conducting and semiconducting materials.

In an exemplary embodiment of the light modulator, the particles are adapted to absorb light with a wavelength of 10 nm-1 mm, such as 400-800 nm, 700 nm to 1 µm, and 10-400 nm, and/or are adapted to absorb a part of the light with a wavelength-range falling within 10 nm-1 mm (filter), and combinations thereof.

In an exemplary embodiment of the light modulator, the particles are electrically charged or chargeable. For example, a charge on the particles may be 0.1e to 10e per particle (5*10⁻⁷-0.1 C/m²).

In an exemplary embodiment of the light modulator, the fluid is present in an amount of 1-1000 g/m², preferably 2-75 g/m², more preferably 20-50 g/m², such as 30-40 g/m². It is a big advantage that with the present layout much less fluid, and likewise particles, can be used.

In an exemplary embodiment of the light modulator, the particles are present in an amount of 0.01-70 g/m^2, preferably 0.02-10 g/m^2, such as 0.1-3 g/m^2.

In an exemplary embodiment of the light modulator, the particles have a color selected from cyan, magenta, and yellow, and from black and white, and combinations thereof.

The light modulator can be also configured to only, or primarily, modulate non-visible light such as UV or near-IR, e.g., respectively in the range of about 10 nm-380 nm, and in the range of about 750 nm - 1 µm.

In an exemplary embodiment of the light modulator, the fluid comprises one or more of a surfactant, an emulsifier, a polar compound, and a compound capable of forming a hydrogen bond.

Fluid 15 may be an apolar fluid with a dielectric constant less than 15. In an exemplary embodiment of the light modulator, the fluid has a relative permittivity εr of less than 100, preferably less than 10, such as less than 5. In an exemplary embodiment of the light modulator, fluid 15 has a dynamic viscosity of above 10 mPa.s.

Electrodes 13a, 13b and electrodes 14a, 14b are in fluidic contact with the fluid. The fluid may be in direct contact with the electrodes, or indirectly, e.g., the fluid may contact a second medium with the electrode, such as through a porous layer. In an embodiment, the electrodes cover about 1-30% of the substrate surface. In an embodiment, the electrodes comprise an electrically conducting material with a resistivity of less than 100 nS2m (at 273K; for comparison, typically used ITO has 105 nS2m), which is similar to an electrical conductivity >1*10⁷ S/m at 20°C).

In an embodiment of the light modulator, electrodes comprise copper, silver, gold, aluminum, graphene, titanium, indium, and combinations thereof, preferably copper. The electrodes may be in the form of microwires embedded in a polymer-based substrate; for example, copper microwires.

A connection for applying an electric field to the electrodes, wherein the applied electric field to the electrodes provides movement of the nano- and microparticles from a first electrode to a second electrode and vice versa. A connection for applying an electric field to the electrodes may be provided. For example, in an exemplary embodiment of the light modulator, an electrical current is between -100 to +100 µA, preferably -30 to +30 µA, more preferably -25 to +25 µA. For example, a power provider may be in electrical connection with the at least two electrodes. The power provider may be adapted to provide a waveform power. At least one of amplitude, frequency, and phase may be adaptable to provide different states in the light modulator. For example, these aspects of the power may be adapted by a controller 16. The controller 16 may be connected to one or more contact areas of the light modulator.

Light modulator 10 may comprise one or more segments, a segment being a single optically switchable entity, which may vary in size. The substrates enclose a volume, which may be a segment, at least partly.

The present device may comprise a driver circuit for changing the appearance of (individual) segments by applying an electric field. As such also the appearance of the light modulator, or one or more parts thereof, may be changed. For example, a segment may have an area of at least 1 mm². The present design allows for stacking to allow for more colors; e.g., for full-color applications, a stack of two or three modulators could provide most or all colors, respectively.

Having one or more segments allows the light modulator to be controlled locally; this is advantageous for some applications but not necessary. For smart glazing, a light modulator may be used with or without segments. For example, applied in smart glazing, transparency or reflectivity may be controlled locally, e.g., to block a sun-patch without reducing transparency or reflectivity in the whole window. Segments may be relatively large, e.g., having a diameter of at least 1 mm, or at least 1 cm, etc.

In an exemplary embodiment of the light modulator, substrates (11,12) are aligned, and/or electrodes (13,14) are aligned. For example, electrodes 13a, 13b and electrodes 14a, 14b may be aligned to be opposite each other. In aligned substrates, electrodes on different substrates fall behind each other when viewed in a direction orthogonal to the substrates. When the light modulator is disassembled, and the substrates are both arranged with electrodes face-up, then the electrode patterns are each other's mirror image.

Aligning substrates may increase the maximum transparency or reflectivity of the light modulator. On the other hand, when selecting a light modulator for more criteria than the range of transparency or reflectivity, etc., it may be better not to align or not fully align the two substrates. Light modulators can be stacked. For example, two stacked light modulators can be made from three substrates, wherein the middle one has electrodes on both its surfaces. In an embodiment of the light modulator, optionally at least one substrate 11,12 of a first light modulator is the same as a substrate 11,12 of at least one second light modulator. For stacked modulators, alignment may also increase maximum transparency or reflectivity, but it may be detrimental to other considerations, e.g., diffraction.

**Figure 8b** schematically shows an example of an embodiment of a light modulator 40. Light modulator 40 is similar to light modulator 10, except that it comprises multiple optical layers; in the example as shown, two optical layers. There may be more than two optical layers. Each optical layer is arranged between two substrates. Light modulator 40 can be regarded as a stack of two-substrate light modulators as in figure 8a. As shown, light modulator 40 comprises three substrates: first substrate 41, second substrate 42, and third substrate 43. Between substrates 41 and 42 is an optical layer, and between substrates 42 and 43 is an optical layer. The optical layers may be similar to those in light modulator 10. A controller 46 is configured to control the electrical current on the electrodes of the substrates. For example, in figure 8b, controller 46 may be electrically connected to at least 4 times 2 equals 8 electrodes.

Interestingly, the particles in the multiple optical layers may be different so that the multiple layers may be used to control more optical properties of the light modulator. For example, particles in different optical layers may absorb or reflect at different wavelengths, e.g., may have a different color. This can be used to create different colors and/or different color intensities on the panel by controller 46. For example, a four-substrate panel may have three optical layers with different color particles, e.g., cyan, yellow, and magenta, respectively. By controlling the transparency or reflectivity for the different colors, a wide color spectrum may be created.

The surfaces of the substrates that face another substrate may be supplied with two or more patterns, e.g., as in an embodiment. For example, the outer substrates 41 and 43 may receive electrodes only on an inner side, while the inner substrate, e.g., substrate 42, may have electrodes on both sides.

Substrates 41 and 42 may together be regarded as an embodiment of a light modulator. Likewise, substrates 42 and 43 may together be regarded as an embodiment of a light modulator. One or more of substrates 41, 42, and 43 may be provided with a contact area to connect to the electrodes.

**Figure 8c** schematically shows an example of an embodiment of a car 20 having smart glazing for windows 21. This is a particularly advantageous embodiment since, while driving, the level of incident lighting can change often and rapidly. Using smart glazing in a car has the advantage that light levels can be maintained at a constant level by adjusting the transparency of the car windows. Moreover, the reduced diffraction effect improves safety as it reduces driver distraction. Car 20 may comprise a controller configured for controlling the transparency or reflectivity of windows 21. Smart glazing can also be used in other glazing applications, especially where the amount of incident light is variable, e.g., buildings, offices, houses, greenhouses, and skylights. Skylights are windows arranged in the ceiling to allow sunlight to enter the room.

The light modulator may have two optical states, e.g., a transparent state and a non-transparent state, or a non-reflective state and a reflective state. The light modulator, e.g., light modulator 10 or light modulator 40, may be configured to
- switch to the second optical state, e.g., the non-transparent state or to the reflective state by creating an alternating voltage on at least one of the first and second substrates, applying an alternating current between at least a first electrode and a second electrode on the first substrate and/or between a first electrode and a second electrode on the second substrate, and
- switch to the first optical state, e.g., the transparent state or to the non-reflective state by creating an alternating voltage between the first and second substrate, applying an alternating current between a first electrode on the first substrate and a first electrode on the second substrate, and/or between a second electrode on the first substrate and a second electrode on the second substrate.

The electrode pattern on the first substrate is arranged at least in part in the same pattern as a second electrode on the second substrate. Typically, the electrodes oppose each other, but the pattern of the first electrode and second electrode may also be shifted with respect to each other.

A protective coating may be provided on at least a part of the inner surface area of at least one of the first substrate and the second substrate. A driving signal applied to electrodes typically has a varying voltage. For example, a power provider may be operated at an AC frequency for switching to a transparent state or to a non-transparent state. Such a signal may have a frequency between, say, 1-1000 Hz. A balanced electrolysis current may be obtained by continuously switching the polarity of oppositely charged electrodes on the first and on the second substrates and/or between the first and the second substrates.

**Figures 9a-9b** schematically show a side view of an embodiment of a light modulator in use. In this figure, only the electrodes are shown.

Applying an electric field to the electrodes on the substrates causes an electrical force on the particles. Using this effect, the particles can be moved around, and so different transparency or reflectivity states can be caused in the light modulator. A controller may control the electric field, e.g., its amplitude, frequency, and phase. In an embodiment, the controller is connected to at least four electrodes: two for each substrate. But more electrodes may be used and connected to the controller; for example, more than 2 electrodes may be used for a substrate to better fine-tune grayscaling and driving to a non-transparent or reflective state. Multiple electrodes may also be used to support multiple segments on the substrate.

**Figure 9a** shows the light modulator without an electric field being applied. No electric force is yet applied on particles 30 suspended in fluid 15, in figure 9a.

In the configuration shown in figure 9a, a conducting electrode pattern, arranged on the top substrate, is completely or substantially aligned with a conducting electrode pattern on the bottom substrate. The conducting electrode pattern may be deposited on a transparent or (partially) reflective glass substrate or may be embedded in a plastic substrate, etc.

Alignment between the top-electrode pattern and the bottom electrode pattern contributes to a wider range of achievable levels of transparency or reflectivity. However, alignment is not needed, as similar effects can be obtained without alignment. Without alignment, a range of transparency or reflectivity is likewise obtained.

Note that in these examples, reference is made to the top substrate and the bottom substrate to refer to the substrate that is higher or lower on the page. The same substrates could also be referred to, e.g., as the front substrate and back substrate, since in a glazing application, the substrates would be aligned vertically rather than horizontally.

**Figure 9b** shows the light modulator wherein, say at an instance P1, a potential +V1 is applied to each microwire electrode on the top substrate, while a negative voltage, say -V1, is applied to each microwire electrode of the bottom substrate. Thus, in this case, the same positive potential is applied to all electrodes 13, and the same negative potential is applied to electrodes 14. The difference in potential causes negatively charged particles to flow to the vicinity of the electrodes of the top substrate, where the particles will substantially align with the top electrodes. As a result, if both the top and bottom substrates are transparent, the transparency of light modulator 10 will increase. Likewise, if, e.g., the top substrate is transparent and the bottom substrate is reflective, the reflectivity of light modulator 10 will increase. If the solution contains positively charged particles, they will flow to the vicinity of the electrodes of the bottom substrate, where those particles will substantially align with the bottom electrodes.

A similar transparency can be achieved when in a second instance, P2, of the on-state, the voltages of the top electrodes and bottom electrodes are reversed in contrast to the instance of P1. In the instance P2, the voltage of each electrode on the top substrate is now supplied with a negative potential -V1 while the voltages of the aligned electrodes of the bottom substrate are supplied with a positive potential. This state is similar to the state shown in figure 9b, but with top and bottom substrates reversed. In this configuration, the transparency of light modulator 10 is also high. If reflective particles are used, then reflectivity is low.

Interestingly, by switching between a positive potential at electrodes at the top substrate, e.g., as shown as electrodes 13 in figure 9b (and a negative potential on electrodes 14), and a positive potential at electrodes at the bottom substrate, e.g., as shown as electrodes 14 in figure 9b, the transparency or non-reflectivity can be maintained, while decreasing corrosion damage to the electrodes. This alternating electric field can be achieved by applying alternating electric potentials to the top and bottom electrodes.

Applying an AC waveform is optional, but it is a useful measure to increase the lifetime of the light modulator by reducing corrosion. Corrosion can form, for example, when using copper electrodes, since copper ions dissolve in an ionic fluid at one substrate and flow to electrodes on the opposite substrate, where they deposit. By applying a waveform, the direction of copper ion transport is frequently reversed, thus reducing corrosion damage. Between the two instances P1 and P2, the corrosion current between the two substrates is balanced or substantially, e.g., >95%, balanced, e.g., as corrosion rate of an electrode of the top plate occurs, there is a balancing deposition of copper on the bottom electrode between each instance of time, P1, and vice versa in instance P2. Therefore, the particles are transitioning or migrating continuously between top and bottom electrodes, and the light modulator or smart window is always in the on-state while the dynamic electrolysis current between the top and bottom electrodes is constant, thus there is no or a negligible net loss of electrode material on the top and bottom substrates.

**Figure 9c** shows how a state of decreased transparency or increased reflectivity can be obtained. An alternating voltage is applied on the same substrate. For example, in an embodiment, a potential +V2 is applied to a first electrode and the next immediate neighboring electrode has an opposite potential -V2 etc., as shown in fig. 8c. This can be obtained by applying the potential +V2 to electrode 13a and the opposite potential -V2 to electrode 13b. On the opposite substrate, the potential +V2 may be applied to electrode 14a and the opposite potential -V2 to electrode 14b. For example, the electrodes may be arranged so that the electrodes on the substrates are aligned; an electrode on the top substrate having an opposite electrode on the bottom substrate, and vice versa. For example, to decrease transparency or increase reflectivity, the opposite electrode may receive the same potential, while neighboring electrodes receive an opposite potential. An embodiment is shown in figure 9c, wherein four electrodes are indicated with the reference numbers 13a, 13b, 14a, and 14b, and the rest of the electrodes continue to alternate.

By using this AC drive cycle between top and bottom substrates, diagonal and lateral electric fields are generated between the two substrates thereby causing haphazard diffusion of the particles, thereby creating the closed state of the light modulator. As a result of this configuration, the particles migrate diagonally and laterally between the top and bottom substrates and diffusion of particles into the visible aperture of the light modulator contributes to the closed, opaque state of the light modulator.

As for the transparent state shown in figure 9b, a waveform may be applied to the electrodes, e.g., so that electrodes that are shown in figure 9b with a positive potential become negative and vice versa. As in figure 9b, applying a waveform, e.g., between electrodes 13a and 13b and between 14a and 14b reduces corrosion damage to the electrodes.

The AC drive cycle may be implemented by using an interdigitated line configuration combining the top and bottom electrode configuration shown in plan view in figures 6a, 6b, 7a-7f, etc.

The extent to which transparency or reflectivity is increased or decreased in figures 9b and 9c depends on the voltage and frequencies difference. By varying the voltage difference, the amount by which the transparency or reflectivity increases, respectively, decreases, is controlled. For example, a curve representing light transmission versus voltage may be determined, e.g., measured. To obtain a particular level of light transmission, e.g., a particular transparency, e.g., a particular grayscale level, the corresponding voltage, e.g., AC voltage may be applied. By interpolating the signals for a transparent or for a non-transparent state, levels in between transparent and non-transparent may be obtained. Likewise, a curve representing light reflection versus voltage may be determined, e.g., measured. To obtain a particular level of reflectivity, the corresponding voltage, e.g., AC voltage may be applied. By interpolating the signals for a reflective or for a non-reflective state, levels in between reflective and non-reflective may be obtained.

Different electrode patterns may be used for a light modulator. The electrode patterns may each provide a range of grayscales, e.g., levels of transparency or reflectivity, that the light modulator can attain. However, the particular range of grayscale for any particular electrode pattern may be different from another electrode pattern. In other words, although different patterns give an increased transparency or reflectivity or an increased opacity, the exact response to a drive signal depends on many factors, including the particular pattern that is used. The variations in the optical properties of a light modulator may have a fine resolution, e.g., below 1 mm. Note that no pixelation of the light modulator is needed to achieve different optical patterns, e.g., logos, visible in the light modulator.

This effect may be used to embed visible images in the light modulator by locally changing the electrode pattern on the substrates of a light modulator. For example, one may locally have grayscales that have a permanent offset in grayscale relative to each other, because of a different electrode pattern. For example, by locally changing the electrode pattern or its pitch, the maximum transparency or reflectivity can be altered.

The result is an area on the light modulator which has a different intensity of grayscale, e.g., a different grayscale, or of coloring. The area may have the same color point, though. In an embodiment, they may switch together with the rest of the window, although at a different rate. For example, even if the same voltage is applied to the electrodes in two different areas, they cause a different transparency state, e.g., different transmission level, due to different electrode patterns. For example, a curve representing transmission versus voltage may be shifted. For example, if voltage control is changed in the same way in both areas, then in both areas light transmission may change, but with a different amount. An area may also be made less responsive to a drive signal by reducing the density of electrodes; in particular, an area may be made not to switch at all, e.g., by not applying electrodes in the area.

For example, the electrode material may be copper, aluminum, gold, indium-tin oxide (ITO), etc. ITO is transparent while Cu/Al is reflective, thus using a different electrode material, a different appearance may be obtained, irrespective of the voltage driving. Likewise, different materials with different resistance will give rise to a different electric field. For example, ITO will have a smaller electric field, even though driven with the same voltage.

An embodiment of a method of modulating light comprises applying an electric potential to multiple electrodes applied to two opposing substrates according to an embodiment to obtain an electric field between the multiple electrodes providing electrophoretic movement of the particles towards or from one of the multiple electrodes causing modulation of light shining through the substrates, wherein the two opposing substrates are as in an embodiment.

Various modes of operation are supported by an embodiment of a four-electrode light modulator system.

### Horizontal drive

Horizontal drive is a mode in which lateral electric fields are created along the substrate. The light modulator may apply an alternating voltage on the interdigitated electrodes to cause the particles in the optical layer to move parallel to the substrate, thus decreasing transparency.

### Vertical drive

Vertical drive is a mode in which particles are aligned orthogonally to the substrates. Electrodes opposite to each other on opposite substrates receive a different voltage.

### Maintaining a grayscale

The light modulator drive system may apply 0 voltage on the electrodes most of the time, but if the grayscale is dropping due to the particles dispersing, then briefly the electrodes and may be driven as in vertical drive.

In all three modes, the driving may use DC or AC signals. Preferably, AC signals are used.

**Figure 10** schematically shows an example of an embodiment of a method 700 for making vacuum insulated glass. Method 700 comprises
- providing (701) a first substrate, the first substrate having a sealant barrier applied around a perimeter of a surface of the first substrate,
- providing (702) a second substrate having a surface,
- applying (703) a sealant on the surface of the first or second substrate,
- introducing (704) the first and second substrate into a low-pressure chamber, pressing the first and second substrate onto each other, the surfaces of the first and second substrate facing each other, wherein, after the pressing, the sealant has been applied around the perimeter of the surface of the first and second substrate outside the sealant barrier thus sealing a low-pressure layer extending between the first and second substrate, wherein the sealant barrier maintains an integrity of the sealant after the sealant is exposed to atmospheric pressure outside the low-pressure chamber.

The following numbered clauses represent advantageous examples.
Clause 1. A method (700) for making vacuum insulated glass,
   - providing (701) a first substrate, the first substrate having a sealant barrier applied around a perimeter of a surface of the first substrate,
   - providing (702) a second substrate having a surface,
   - applying (703) a sealant on the surface of the first or second substrate,
   - introducing (704) the first and second substrate into a low-pressure chamber, pressing the first and second substrate onto each other, the surfaces of the first and second substrate facing each other, wherein, after the pressing, the sealant has been applied around the perimeter of the surface of the first and second substrate outside the sealant barrier thus sealing a low-pressure layer extending between the first and second substrate, wherein the sealant barrier maintains an integrity of the sealant after the sealant is exposed to atmospheric pressure outside the low-pressure chamber.
Clause 2. A method of Clause 1, wherein
   - the sealant barrier determines a cell gap between the first and second sub strate, or
   - the sealant barrier cooperates with a further sealant barrier on the second substrate, the sealant barrier and further sealant barrier aligning after the pressing and together determining a cell gap between the first and second substrate.
Clause 3. A method of Clause 1 or 2, wherein
   - the sealant barrier forms a contiguous ring around the perimeter of the first surface, or
   - the sealant barrier forms a perforated ring around the perimeter of the first surface, perforations in the perforated ring have a width of at most 1 mm.
Clause 4. A method of any one of the preceding clauses, wherein
   - the sealant comprises a UV-curable material, the method comprising curing the sealant by exposing the UV-curable material to ultraviolet (UV) light, and/or
   - the sealant comprises a temperature-curable material, the method comprising curing the sealant by subjecting the temperature-curable material to a controlled heating process, and/or
   - the sealant comprises a pressure-curable material, the method curing the sealant by applying a predetermined pressure to the pressure-curable material, and/or
   - the sealant binds the first and second substrate by capillary forces, wherein the sealant is not cured.
Clause 5. A method of any one of the preceding clauses, wherein sealant undergoes cross-linking to become rigidified.
Clause 6. A method as in any one of the preceding clauses, wherein the sealant as applied is a low vapor pressure liquid having a vapor pressure of most 1.34 · 10³ Pa at 25°C, preferably, at most 1 · 10² Pa at 25°C, more preferably, at most 1 · 10¹ Pa at 25°C.
Clause 7. A method as in any one of the preceding clauses, wherein the low-pressure layer reduces heat conduction across the cell gap between the first and second substrate.
Clause 8. A method as in any one of the preceding clauses, wherein the low-pressure layer has a pressure of at most 1 Pa, or at most 0.1 Pa, or at most 0.05 Pa.
Clause 9. A method as in any one of the preceding clauses, wherein the sealant bonds the first and second substrates together.
Clause 10. A method as in any one of the preceding clauses, wherein
   - the first and second substrate are both transparent, and/or
   - the first and/or second substrate are made from a material selected from glass, plastic.
Clause 11. A method as in any one of the preceding clauses, wherein
   - applying the sealant is performed before pressing the first and second substrate onto each other, and/or
   - applying the sealant is performed before introducing the first and second substrate into the low-pressure chamber, or
   - applying the sealant is performed after introducing the first and second substrate into the low-pressure chamber, and/or
   - the sealant is cured outside the low-pressure chamber.
Clause 12. A method as in any one of the preceding clauses, wherein the sealant barrier is applied onto the first substrate, before introducing the first and second substrate into the low-pressure chamber.
Clause 13. A method as in any one of the preceding clauses,
   - wherein the sealant barrier is applied onto the first substrate using a photolithography process,
   - wherein the sealant barrier comprises a curable material, the curable material being applied onto the first substrate and cured to form the sealant barrier, before introducing the first and second substrate into the low-pressure chamber,
   - the sealant barrier is obtained by an imprinting process, embossing process, and/or etching process.
Clause 14. A method as in any one of the preceding clauses, wherein the sealant barrier comprises a UV-curable material, the method comprising:
   - applying the UV-curable material on the substrate, and
   - exposing the UV-curable material to ultraviolet (UV) light through a photomask to cure the sealant barrier. Uncured material may be removed.
Clause 15. A method as in any one of the preceding clauses, wherein further spacers are arranged between the first and second substrates, e.g., wherein photo spacers are arranged across the surface of the first substrate.
Clause 16. A method as in any one of the preceding clauses, wherein the sealant is applied on the surface of the first substrate outside the sealant barrier.
Clause 17. A method as in any one of the preceding clauses, comprising
   - applying a further sealant on the surface of the first or second substrate, wherein the further sealant is applied around the perimeter, inside of the sealant barrier, the further sealant being further from the perimeter than the sealant barrier.
Clause 18. A method as in any one of the preceding clauses, wherein
   - multiple nested sealant barriers are applied around a perimeter of a surface of the first substrate and/or the second substrate,
   - wherein the sealant is enclosed in a volume between two consecutive sealant barriers of the multiple nested sealant barriers and the first and second substrate.
Clause 19. A method as in Clause 18,
   - wherein the sealant is applied on the surface of the first substrate, before the pressing, and/or
   - wherein the sealant is applied on the surface of the second substrate, before the pressing.
Clause 20. A method as in any one of the preceding clauses, wherein the sealant is applied on a surface of the sealant barrier between the sealant barrier and the second substrate.
Clause 21. A method as in any one of the preceding clauses, wherein during the pressing the first substrate is arranged as a top substrate and the second substrate as a bottom substrate.
Clause 22. A method as in any one of the preceding clauses, wherein
   - spacer particles are mixed in the sealant, and/or
   - ball spacers are mixed in the sealant.
Clause 23. A method as in any one of the preceding clauses,
   - wherein the sealant is UV curable, and/or
   - wherein the sealant comprises a UV-curable resin selected from the group consisting of epoxy-based, acrylic-based, polyurethane-based, and silicone-based resins.
Clause 24. A method as in any one of the preceding clauses, wherein
   - the cell gap is at most 50 mm, or at most 1 mm, or at most 0.5 mm, or at most 0.1 mm, or at most 0.01 mm, and/or
   - the cell gap is at least 1 micron and at most 500 micron, preferably, at least 20 micron and at most 100 micron, preferably, at least 20 micron and at most 50 micron,
   - a sealant barrier width is at least 40% and at most 200% of the cell gap, preferably, at least 75% and at most 125% of the cell gap,
Clause 25. A method as in any one of the preceding clauses, wherein introducing the first and second substrate into a low-pressure chamber, and pressing the first and second substrate onto each other, are performed in a one drop fill machine.
Clause 26. The method as in any one of the preceding clauses, comprising
   - providing a light modulator in parallel to the vacuum insulated glass, wherein the light modulator and vacuum insulated glass, share a substrate.
Clause 27. A method as in any one of the preceding clauses, comprising
   - providing (411) a third substrate (360) for a light modulator in the low-pressure chamber,
   - applying (412) on the third substrate, while in the low-pressure chamber, an optical layer (352; 17) extending between the third substrate and the vacuum insulated glass,
   - providing (413) at least one electrode (13a, 13b; 14a, 14b) in the optical layer, thus obtaining a light modulator, optical properties thereof being modifiable by applying an electric potential to the at least one electrode, wherein
   - the third substrate (360) is arranged parallel to the first and second layer, the optical layer extending between the third substrate (360) and the vacuum insulated glass.
Clause 28. A method as in any one of the preceding clauses, comprising applying a further seal around the vacuum insulating glass and/or the light modulator of clause 27, for example, wherein
   - the further seal comprises glass solder
   - the further seal comprises a thermoplastic adhesive,
   - the further seal is obtained by melting together the substrates of the light modulator and the one or more insulating substrate at their perimeters.
Clause 29. A vacuum insulated glass, comprising
   - a first substrate, the first substrate having a sealant barrier applied around a perimeter of a surface of the first substrate,
   - a second substrate having a surface,
   - the first and second substrate being arranged against each other, with a sealant on the surface of the first and second substrate, the surfaces of the first and second substrate facing each other, wherein the sealant is applied around the perimeter of the surface of the first substrate outside the sealant barrier thus sealing a low-pressure layer extending between the first and second substrate.
Clause 30. A vacuum insulated glass of Clause 29, wherein
   - the sealant barrier determines a cell gap between the first and second sub strate, or
   - the sealant barrier cooperates with a further sealant barrier on the second substrate, the sealant barrier and further sealant barrier aligning after the pressing and together determining a cell gap between the first and second substrate.
Clause 31. A vacuum insulated glass of Clause 29 or 30, wherein
   - the sealant barrier forms contiguous ring around the perimeter of the first surface, or
   - the sealant barrier forms perforated ring around the perimeter of the first surface, perforations in the perforated ring have a width of at most 1 mm.
Clause 32. A vacuum insulated glass as in any one of Clauses 29-31 wherein the low-pressure layer reduces heat conduction across the cell gap between the first and second substrate.
Clause 33. A vacuum insulated glass as in any one of Clauses 29-32, wherein the low-pressure layer has a pressure of at most 1 Pa, or at most 0.1 Pa, or at most 0.05 Pa.
Clause 34. A vacuum insulated glass as in any one of Clauses 29-33, wherein the sealant binds the first and second substrate together.
Clause 35. A vacuum insulated glass as in any one of Clauses 29-34, wherein
   - the first and second substrate are both transparent, and/or
   - the first and/or second substrate are made from a material selected from glass, plastic.
Clause 36. A vacuum insulated glass as in any one of clauses 29-35, wherein further spacers are arranged between the first and second substrates, e.g., wherein photo spacers are arranged across the surface of the first substrate.
Clause 37. A vacuum insulated glass as in any one of clauses 29-36, wherein a cured further sealant is applied on the surface of the first and second substrate around the perimeter inside of the sealant barrier, the further sealant being further from the perimeter than the sealant barrier.
Clause 38. A vacuum insulated glass as in any one of clauses 29-37, wherein multiple nested sealant barriers are applied around the perimeter of the surface of the first substrate and/or the second substrate, and wherein the sealant is enclosed in a volume between two consecutive sealant barriers of the multiple nested sealant barriers and the first and second substrate.
Clause 39. A vacuum insulated glass as in any one of Clauses 29-38, wherein
   - the cell gap is at most 50 mm, or at most 1 mm, or at most 0.5 mm, or at most 0.1 mm, or at most 0.01 mm, and/or
   - the cell gap is at least 1 micron and at most 500 micron, preferably, at least 20 micron and at most 100 micron, preferably, at least 20 micron and at most 50 micron,
   - a sealant barrier width is at least 40% and at most 200% of the cell gap, preferably, at least 75% and at most 125% of the cell gap.
Clause 40. A vacuum insulated glass as in any one of Clauses 29-39, comprising a light modulator arranged in parallel to the vacuum insulated glass, wherein the light modulator and vacuum insulated glass share a substrate.
Clause 41. A vacuum insulated glass as in any one of Clauses 29-40, wherein the first substrate and/or the second substrate comprise a photovoltaic system or a display.
Clause 42. A vacuum insulated glass as in any one of Clauses 29-41, comprising
   - a third substrate (360),
   - an optical layer (352; 17) extending between the third substrate and the vacuum insulated glass,
   - at least one electrode (13a, 13b; 14a, 14b) in the optical layer, thus forming a light modulator, optical properties thereof being modifiable by applying an electric potential to the at least one electrode, wherein
   - the third substrate (360) is arranged parallel to the first and second layer, the optical layer extending between the third substrate (360) and the vacuum insulated glass.
Clause 43. A vacuum insulated glass as in any one of Clauses 29-42, comprising a further seal applied around the vacuum insulating glass and/or the light modulator of clause 40 and/or 42, for example, wherein
   - the further seal comprises glass solder, and/or
   - the further seal comprises a thermoplastic adhesive, and/or
   - the further seal is obtained by melting together the substrates of the light modulator and the one or more insulating substrate at their perimeters.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of' when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A method (700) for making vacuum insulated glass,
- providing (701) a first substrate, the first substrate having a sealant barrier applied around a perimeter of a surface of the first substrate,
- providing (702) a second substrate having a surface,
- applying (703) a sealant on the surface of the first or second substrate,
- introducing (704) the first and second substrate into a low-pressure chamber, pressing the first and second substrate onto each other, the surfaces of the first and second substrate facing each other, wherein, after the pressing, the sealant has been applied around the perimeter of the surface of the first and second substrate outside the sealant barrier thus sealing a low-pressure layer extending between the first and second substrate, wherein the sealant barrier maintains an integrity of the sealant after the sealant is exposed to atmospheric pressure outside the low-pressure chamber.

2. A method of Claim 1, wherein
- the sealant barrier determines a cell gap between the first and second sub strate, or
- the sealant barrier cooperates with a further sealant barrier on the second substrate, the sealant barrier and further sealant barrier aligning after the pressing and together determining a cell gap between the first and second substrate.

3. A method of Claim 1 or 2, wherein
- the sealant barrier forms a contiguous ring around the perimeter of the first surface, or
- the sealant barrier forms a perforated ring around the perimeter of the first surface, perforations in the perforated ring have a width of at most 1 mm.

4. A method of any one of the preceding claims, wherein
- the sealant comprises a UV-curable material, the method comprising curing the sealant by exposing the UV-curable material to ultraviolet (UV) light, and/or
- the sealant comprises a temperature-curable material, the method comprising curing the sealant by subjecting the temperature-curable material to a controlled heating process, and/or
- the sealant comprises a pressure-curable material, the method curing the sealant by applying a predetermined pressure to the pressure-curable material, and/or
- the sealant binds the first and second substrate by capillary forces, wherein the sealant is not cured.

5. A method of any one of the preceding claims, wherein sealant undergoes crosslinking to become rigidified.

6. A method as in any one of the preceding claims, wherein the sealant as applied is a low vapor pressure liquid having a vapor pressure of most 1.34 · 10³ Pa at 25°C, preferably, at most 1 · 10² Pa at 25°C, more preferably, at most 1 · 10¹ Pa at 25°C.

7. A method as in any one of the preceding claims, wherein
- applying the sealant is performed before pressing the first and second substrate onto each other, and/or
- applying the sealant is performed before introducing the first and second substrate into the low-pressure chamber, or
- applying the sealant is performed after introducing the first and second substrate into the low-pressure chamber, and/or
- the sealant is cured outside the low-pressure chamber, and/or
- the sealant is applied on the surface of the first substrate outside the sealant barrier.

8. A method as in any one of the preceding claims, wherein the sealant barrier is applied onto the first substrate, before introducing the first and second substrate into the low-pressure chamber.

9. A method as in any one of the preceding claims,
- wherein the sealant barrier is applied onto the first substrate using a photolithography process,
- wherein the sealant barrier comprises a curable material, the curable material being applied onto the first substrate and cured to form the sealant barrier, before introducing the first and second substrate into the low-pressure chamber,
- the sealant barrier is obtained by an imprinting process, embossing process, and/or etching process.

10. A method as in any one of the preceding claims, wherein the sealant barrier comprises a UV-curable material, the method comprising:
- applying the UV-curable material on the substrate, and
- exposing the UV-curable material to ultraviolet (UV) light through a photomask to cure the sealant barrier.

11. A method as in any one of the preceding claims, comprising
- applying a further sealant on the surface of the first or second substrate, wherein the further sealant is applied around the perimeter, inside of the sealant barrier, the further sealant being further from the perimeter than the sealant barrier.

12. A method as in any one of the preceding claims, wherein
- multiple nested sealant barriers are applied around a perimeter of a surface of the first substrate and/or the second substrate,
- wherein the sealant is enclosed in a volume between two consecutive sealant barriers of the multiple nested sealant barriers and the first and second substrate.

13. A method as in Claim 12,
- wherein the sealant is applied on the surface of the first substrate, before the pressing, and/or
- wherein the sealant is applied on the surface of the second substrate, before the pressing.

14. A method as in any one of the preceding claims, wherein the sealant is applied on a surface of the sealant barrier between the sealant barrier and the second substrate.

15. A method as in any one of the preceding claims, wherein during the pressing the first substrate is arranged as a top substrate and the second substrate as a bottom substrate.

16. A method as in any one of the preceding claims, wherein
- spacer particles are mixed in the sealant, and/or
- ball spacers are mixed in the sealant.

17. A method as in any one of the preceding claims,
- wherein the sealant is UV curable, and/or
- wherein the sealant comprises a UV-curable resin selected from the group consisting of epoxy-based, acrylic-based, polyurethane-based, and silicone-based resins.

18. A method as in any one of the preceding claims, wherein introducing the first and second substrate into a low-pressure chamber, and pressing the first and second substrate onto each other, are performed in a one drop fill machine.

19. A method as in any one of the preceding claims, comprising
- providing (411) a third substrate (360) for a light modulator in the low-pressure chamber,
- applying (412) on the third substrate, while in the low-pressure chamber, an optical layer (352; 17) extending between the third substrate and the vacuum insulated glass,
- providing (413) at least one electrode (13a, 13b; 14a, 14b) in the optical layer, thus obtaining a light modulator, optical properties thereof being modifiable by applying an electric potential to the at least one electrode, wherein
- the third substrate (360) is arranged parallel to the first and second layer, the optical layer extending between the third substrate (360) and the vacuum insulated glass.

20. A method as in any one of the preceding claims, comprising applying a further seal around the vacuum insulating glass and/or the light modulator of claim 19, for example, wherein
- the further seal comprises glass solder
- the further seal comprises a thermoplastic adhesive,
- the further seal is obtained by melting together the substrates of the light modulator and the one or more insulating substrate at their perimeters.

21. A vacuum insulated glass, comprising
- a first substrate, the first substrate having a sealant barrier applied around a perimeter of a surface of the first substrate,
- a second substrate having a surface,
- the first and second substrate being arranged against each other, with a sealant on the surface of the first and second substrate, the surfaces of the first and second substrate facing each other, wherein the sealant is applied around the perimeter of the surface of the first substrate outside the sealant barrier thus sealing a low-pressure layer extending between the first and second substrate.

22. A vacuum insulated glass of Claim 21, wherein
- the sealant barrier determines a cell gap between the first and second sub strate, or
- the sealant barrier cooperates with a further sealant barrier on the second substrate, the sealant barrier and further sealant barrier aligning after the pressing and together determining a cell gap between the first and second substrate.

23. A vacuum insulated glass of Claim 21 or 22, wherein
- the sealant barrier forms contiguous ring around the perimeter of the first surface, or
- the sealant barrier forms perforated ring around the perimeter of the first surface, perforations in the perforated ring have a width of at most 1 mm.

24. A vacuum insulated glass as in any one of Claims 21-23 wherein the low-pressure layer reduces heat conduction across the cell gap between the first and second substrate.

25. A vacuum insulated glass as in any one of Claims 21-24, wherein the low-pressure layer has a pressure of at most 1 Pa, or at most 0.1 Pa, or at most 0.05 Pa.

26. A vacuum insulated glass as in any one of Claims 21-25, wherein the sealant binds the first and second substrate together.

27. A vacuum insulated glass as in any one of Claims 21-26, wherein
- the first and second substrate are both transparent, and/or
- the first and/or second substrate are made from a material selected from glass, plastic.

28. A vacuum insulated glass as in any one of claims 21-27, wherein further spacers are arranged between the first and second substrates, e.g., wherein photo spacers are arranged across the surface of the first substrate.

29. A vacuum insulated glass as in any one of claims 21-28, wherein a cured further sealant is applied on the surface of the first and second substrate around the perimeter inside of the sealant barrier, the further sealant being further from the perimeter than the sealant barrier.

30. A vacuum insulated glass as in any one of claims 21-29, wherein multiple nested sealant barriers are applied around the perimeter of the surface of the first substrate and/or the second substrate, and wherein the sealant is enclosed in a volume between two consecutive sealant barriers of the multiple nested sealant barriers and the first and second substrate.

31. A vacuum insulated glass as in any one of Claims 21-30, wherein
- the cell gap is at most 50 mm, or at most 1 mm, or at most 0.5 mm, or at most 0.1 mm, or at most 0.01 mm, and/or
- the cell gap is at least 1 micron and at most 500 micron, preferably, at least 20 micron and at most 100 micron, preferably, at least 20 micron and at most 50 micron,
- a sealant barrier width is at least 40% and at most 200% of the cell gap, preferably, at least 75% and at most 125% of the cell gap.

32. A vacuum insulated glass as in any one of Claims 21-31, wherein the sealant barrier comprises a plurality of alternating protrusions and recessions along at least part of its perimeter.

33. A vacuum insulated glass as in any one of Claims 21-32, comprising a light modulator arranged in parallel to the vacuum insulated glass, wherein the light modulator and vacuum insulated glass share a substrate.

34. A vacuum insulated glass as in any one of Claims 21-33, wherein the first substrate and/or the second substrate comprise a photovoltaic system or a display.

35. A vacuum insulated glass as in any one of Claims 21-34, comprising
- a third substrate (360),
- an optical layer (352; 17) extending between the third substrate and the vacuum insulated glass,
- at least one electrode (13a, 13b; 14a, 14b) in the optical layer, thus forming a light modulator, optical properties thereof being modifiable by applying an electric potential to the at least one electrode, wherein
- the third substrate (360) is arranged parallel to the first and second layer, the optical layer extending between the third substrate (360) and the vacuum insulated glass.

36. A vacuum insulated glass as in any one of Claims 21-35, comprising a further seal applied around the vacuum insulating glass and/or the light modulator of claim 33 and/or 35, for example, wherein
- the further seal comprises glass solder, and/or
- the further seal comprises a thermoplastic adhesive, and/or
- the further seal is obtained by melting together the substrates of the light modulator and the one or more insulating substrate at their perimeters.

## Amended claims

### Amended claims in accordance with Rule 137(2) EPC.

1. A vacuum insulated glass, comprising
- a first substrate, the first substrate having a sealant barrier applied around a perimeter of a surface of the first substrate,
- a second substrate having a surface,
- the first and second substrate being arranged against each other, with a sealant on the surface of the first and second substrate, the surfaces of the first and second substrate facing each other, wherein the sealant is applied around the perimeter of the surface of the first substrate outside the sealant barrier thus sealing a low-pressure layer extending between the first and second substrate, wherein the sealant binds the first and second substrate by capillary forces.

2. A vacuum insulated glass of Claim 1, wherein
- the sealant barrier determines a cell gap between the first and second substrate, or
- the sealant barrier cooperates with a further sealant barrier on the second substrate, the sealant barrier and further sealant barrier aligning after the pressing and together determining a cell gap between the first and second substrate.

3. A vacuum insulated glass of Claim 1 or 2, wherein
- the sealant barrier forms contiguous ring around the perimeter of the first surface, or
- the sealant barrier forms perforated ring around the perimeter of the first surface, perforations in the perforated ring have a width of at most 1 mm.

4. A vacuum insulated glass as in any one of Claims 1- 3 wherein the low-pressure layer reduces heat conduction across the cell gap between the first and second substrate.

5. A vacuum insulated glass as in any one of Claims 1- 4, wherein the low-pressure layer has a pressure of at most 1 Pa, or at most 0.1 Pa, or at most 0.05 Pa.

6. A vacuum insulated glass as in any one of Claims 1- 5, wherein the sealant binds the first and second substrate together by capillary forces.

7. A vacuum insulated glass as in any one of Claims 1- 6, wherein
- the first and second substrate are both transparent, and/or
- the first and/or second substrate are made from a material selected from glass, plastic.

8. A vacuum insulated glass as in any one of claims 1- 7, wherein further spacers are arranged between the first and second substrates, e.g., wherein photo spacers are arranged across the surface of the first substrate.

9. A vacuum insulated glass as in any one of claims 1- 8, wherein a cured further sealant is applied on the surface of the first and second substrate around the perimeter inside of the sealant barrier, the further sealant being further from the perimeter than the sealant barrier.

10. A vacuum insulated glass as in any one of claims 1- 9, wherein multiple nested sealant barriers are applied around the perimeter of the surface of the first substrate and/or the second substrate, and wherein the sealant is enclosed in a volume between two consecutive sealant barriers of the multiple nested sealant barriers and the first and second substrate.

11. A vacuum insulated glass as in any one of Claims 1- 10, wherein
- the cell gap is at most 50 mm, or at most 1 mm, or at most 0.5 mm, or at most 0.1 mm, or at most 0.01 mm, and/or
- the cell gap is at least 1 micron and at most 500 micron, preferably, at least 20 micron and at most 100 micron, preferably, at least 20 micron and at most 50 micron,
- a sealant barrier width is at least 40% and at most 200% of the cell gap, preferably, at least 75% and at most 125% of the cell gap.

12. A vacuum insulated glass as in any one of Claims 1- 11, wherein the sealant barrier comprises a plurality of alternating protrusions and recessions along at least part of its perimeter.

13. A vacuum insulated glass as in any one of Claims 1- 12, comprising a light modulator arranged in parallel to the vacuum insulated glass, wherein the light modulator and vacuum insulated glass share a substrate.

14. A vacuum insulated glass as in any one of Claims 1- 13, wherein the first substrate and/or the second substrate comprise a photovoltaic system or a display.

15. A vacuum insulated glass as in any one of Claims 1- 14, comprising
- a third substrate (360),
- an optical layer (352; 17) extending between the third substrate and the vacuum insulated glass,
- at least one electrode (13a, 13b; 14a, 14b) in the optical layer, thus forming a light modulator, optical properties thereof being modifiable by applying an electric potential to the at least one electrode, wherein
- the third substrate (360) is arranged parallel to the first and second layer, the optical layer extending between the third substrate (360) and the vacuum insulated glass.

16. A vacuum insulated glass as in any one of Claims 1- 15, comprising a further seal applied around the vacuum insulating glass and/or the light modulator of claim 13 and/or 15, for example, wherein
- the further seal comprises glass solder, and/or
- the further seal comprises a thermoplastic adhesive, and/or
- the further seal is obtained by melting together the substrates of the light modulator and the one or more insulating substrate at their perimeters.

17. A method (700) for making vacuum insulated glass,
- providing (701) a first substrate, the first substrate having a sealant barrier applied around a perimeter of a surface of the first substrate,
- providing (702) a second substrate having a surface,
- applying (703) a sealant on the surface of the first or second substrate,
- introducing (704) the first and second substrate into a low-pressure chamber, pressing the first and second substrate onto each other, the surfaces of the first and second substrate facing each other, wherein, after the pressing, the sealant has been applied around the perimeter of the surface of the first and second substrate outside the sealant barrier thus sealing a low-pressure layer extending between the first and second substrate, wherein the sealant binds the first and second substrate by capillary forces, and wherein the sealant barrier maintains an integrity of the sealant after the sealant is exposed to atmospheric pressure outside the low-pressure chamber, obtaining the vacuum insulated glass according to Claim 1.

18. A method of Claim 17, wherein, before the pressing, the sealant is only applied on one of the first and second substrates, and the pressing causes the sealant to be deposed on the surface of both the first and second substrate.

19. A method of Claim 17, wherein
- the sealant barrier determines a cell gap between the first and second substrate, or
- the sealant barrier cooperates with a further sealant barrier on the second substrate, the sealant barrier and further sealant barrier aligning after the pressing and together determining a cell gap between the first and second substrate.

20. A method of Claim 17 or 19, wherein
- the sealant barrier forms a contiguous ring around the perimeter of the first surface, or
- the sealant barrier forms a perforated ring around the perimeter of the first surface, perforations in the perforated ring have a width of at most 1 mm.

21. A method of any one of Claims 17-20, wherein
- the sealant comprises a UV-curable material, the method comprising curing the sealant by exposing the UV-curable material to ultraviolet (UV) light, and/or
- the sealant comprises a temperature-curable material, the method comprising curing the sealant by subjecting the temperature-curable material to a controlled heating process, and/or
- the sealant comprises a pressure-curable material, the method curing the sealant by applying a predetermined pressure to the pressure-curable material, /or wherein the sealant is not cured.

22. A method of any one of Claims 17-21, wherein sealant undergoes cross-linking to become rigidified.

23. A method as in any one of Claims 17-22, wherein the sealant as applied is a low vapor pressure liquid having a vapor pressure of most 1.34 · 10³ Pa at 25°C, preferably, at most 1 · 10² Pa at 25°C, more preferably, at most 1 · 10¹ Pa at 25°C.

24. A method as in any one of Claims 17-23, wherein
- applying the sealant is performed before pressing the first and second substrate onto each other, and/or
- applying the sealant is performed before introducing the first and second substrate into the low-pressure chamber, or
- applying the sealant is performed after introducing the first and second substrate into the low-pressure chamber, and/or
- the sealant is cured outside the low-pressure chamber, and/or
- the sealant is applied on the surface of the first substrate outside the sealant barrier.

25. A method as in any one of Claims 17-24, wherein the sealant barrier is applied onto the first substrate, before introducing the first and second substrate into the low-pressure chamber.

26. A method as in any one of Claims 17-25,
- wherein the sealant barrier is applied onto the first substrate using a photolithography process,
- wherein the sealant barrier comprises a curable material, the curable material being applied onto the first substrate and cured to form the sealant barrier, before introducing the first and second substrate into the low-pressure chamber,
- the sealant barrier is obtained by an imprinting process, embossing process, and/or etching process.

27. A method as in any one of Claims 17-26, wherein the sealant barrier comprises a UV-curable material, the method comprising:
- applying the UV-curable material on the substrate, and
- exposing the UV-curable material to ultraviolet (UV) light through a photomask to cure the sealant barrier.

28. A method as in any one of Claims 17-27, comprising
- applying a further sealant on the surface of the first or second substrate, wherein the further sealant is applied around the perimeter, inside of the sealant barrier, the further sealant being further from the perimeter than the sealant barrier.

29. A method as in any one of Claims 17-28, wherein
- multiple nested sealant barriers are applied around a perimeter of a surface of the first substrate and/or the second substrate,
- wherein the sealant is enclosed in a volume between two consecutive sealant barriers of the multiple nested sealant barriers and the first and second substrate.

30. A method as in Claim 29,
- wherein the sealant is applied on the surface of the first substrate, before the pressing, and/or
- wherein the sealant is applied on the surface of the second substrate, before the pressing.

31. A method as in any one of Claims 17-30, wherein the sealant is applied on a surface of the sealant barrier between the sealant barrier and the second substrate.

32. A method as in any one of Claims 17-31, wherein during the pressing the first substrate is arranged as a top substrate and the second substrate as a bottom substrate.

33. A method as in any one of Claims 17-32, wherein
- spacer particles are mixed in the sealant, and/or
- ball spacers are mixed in the sealant.

34. A method as in any one of Claims 17-33,
- wherein the sealant is UV curable, and/or
- wherein the sealant comprises a UV-curable resin selected from the group consisting of epoxy-based, acrylic-based, polyurethane-based, and silicone-based resins.

35. A method as in any one of Claims 17-34, wherein introducing the first and second substrate into a low-pressure chamber, and pressing the first and second substrate onto each other, are performed in a one drop fill machine.

36. A method as in any one of Claims 17-35, comprising
- providing (411) a third substrate (360) for a light modulator in the low-pressure chamber,
- applying (412) on the third substrate, while in the low-pressure chamber, an optical layer (352; 17) extending between the third substrate and the vacuum insulated glass,
- providing (413) at least one electrode (13a, 13b; 14a, 14b) in the optical layer, thus obtaining a light modulator, optical properties thereof being modifiable by applying an electric potential to the at least one electrode, wherein
- the third substrate (360) is arranged parallel to the first and second layer, the optical layer extending between the third substrate (360) and the vacuum insulated glass.

37. A method as in any one of Claims 17-36, comprising applying a further seal around the vacuum insulating glass and/or the light modulator of claim 36, for example, wherein
- the further seal comprises glass solder
- the further seal comprises a thermoplastic adhesive,
- the further seal is obtained by melting together the substrates of the light modulator and the one or more insulating substrate at their perimeters.
